(19) **Europäisches Patentamt / European Patent Office / Office européen des brevets**

(11) **EP 3 573 022 A1**

(12) # EUROPEAN PATENT APPLICATION
published in accordance with Art. 153(4) EPC

(43) Date of publication:
**27.11.2019 Bulletin 2019/48**

(21) Application number: **18774563.3**

(22) Date of filing: **20.03.2018**

(51) Int Cl.:
**G06T 7/20** (2017.01)

(86) International application number:
**PCT/CN2018/079514**

(87) International publication number:
**WO 2018/177153 (04.10.2018 Gazette 2018/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2017 CN 201710208767**

(71) Applicant: **Huawei Technologies Co., Ltd.**
**Longgang District**
**Shenzhen, Guangdong 518129 (CN)**

(72) Inventors:
• **YANG, Yi**
  **Shenzhen**
  **Guangdong 518129 (CN)**

• **CHEN, Maolin**
  **Shenzhen**
  **Guangdong 518129 (CN)**
• **ZHOU, Jianhui**
  **Shenzhen**
  **Guangdong 518129 (CN)**
• **BAI, Bo**
  **Shenzhen**
  **Guangdong 518129 (CN)**

(74) Representative: **Kreuz, Georg Maria**
**Huawei Technologies Duesseldorf GmbH**
**Riesstraße 25**
**80992 München (DE)**

(54) **METHOD FOR TRACKING PEDESTRIAN AND ELECTRONIC DEVICE**

(57)     Embodiments of the present invention provide a pedestrian tracking method and an electronic device. The method includes: obtaining, within a detection period, an upper body detection box of a to-be-tracked pedestrian appearing in a to-be-tracked video; obtaining a detection period whole body box of the to-be-tracked pedestrian based on the upper body detection box; and obtaining, within the tracking period based on the detection period whole body box, a tracking period whole body box corresponding to an upper body tracking box. It can be learned that the to-be-tracked pedestrian may be tracked by using the tracking period whole body box. An aspect ratio of the detection period whole body box may change. Therefore, even if the to-be-tracked pedestrian appears in an abnormal posture within the detection period, an accurate tracking period whole body box of the to-be-tracked pedestrian can still be obtained by using the method shown in the embodiments, so that preparations can still be made to track the to-be-tracked pedestrian when the to-be-tracked pedestrian appears in the abnormal posture.

EP 3 573 022 A1

Obtain a to-be-tracked video — 301

Obtain a target image frame sequence — 302

Obtain a background area of the to-be-tracked video — 303

Determine a detection period and a tracking period of the to-be-tracked video — 304

Obtain a foreground area of any image frame of the to-be-tracked video — 305

Obtain a to-be-tracked pedestrian — 306

Obtain an upper body detection box of the to-be-tracked pedestrian — 307

Obtain a lower body scanning area based on the upper body detection box — 308

TO
FIG. 3B

FIG. 3A

CONT.
FROM
FIG. 3A

Determine whether a lower body detection box of the to-be-tracked pedestrian is detected in the lower body scanning area — 309

No          Yes

Obtain a third ratio — 313

Obtain the lower body detection box — 310

Obtain the detection period whole body box — 314

Obtain a detection period whole body box — 311

Determine a fourth ratio of the detection period whole body box — 315

Obtain a first ratio and a second ratio — 312

Determine an upper body tracking box — 316

Obtain a tracking period whole body box of the to-be-tracked pedestrian — 317

FIG. 3B

## Description

This application claims priority to Chinese Patent Application No. 201710208767.7, filed with the Chinese Patent Office on March 31, 2017 and entitled "PEDESTRIAN TRACKING METHOD AND ELECTRONIC DEVICE", which is incorporated herein by reference in its entirety.

## TECHNICAL FIELD

The present invention relates to the field of communications technologies, and in particular, to a pedestrian tracking method and an electronic device.

## BACKGROUND

In the historical background of establishing a safe city, an intelligent video analysis system is increasingly concerned. The intelligent video analysis system needs to automatically and intelligently analyze pedestrians in massive video data, for example, calculate a motion trail of a pedestrian, detect an abnormal pedestrian entry in a restricted area, automatically detect a pedestrian on a road and remind a driver to avoid the pedestrian, and help the police to search for a criminal suspect through an image-based image search, so as to greatly improve work efficiency and reduce human costs.

To automatically extract pedestrians from massive video data, pedestrian detection and tracking algorithms need to be used. Pedestrian detection refers to inputting an image, automatically finding a pedestrian in the image by using a detection algorithm, and providing a location of the pedestrian in a form of a rectangular box. The rectangular box is referred to as a detection box of the pedestrian. Because a pedestrian is in motion in a video, the pedestrian needs to be tracked by using a pedestrian tracking algorithm, to obtain a location of the pedestrian in each frame in the video. The location is also provided in a form of a rectangular box, and the rectangular box is referred to as a tracking box of the pedestrian.

Disadvantages in the prior art are as follows: 1. The detection box is not accurate enough: An aspect ratio of the detection box of the pedestrian is fixed, and the whole body of the pedestrian is detected. Therefore, when the pedestrian appears in an abnormal posture, for example, the legs are wide open, and therefore the aspect ratio increases, the detection box of the pedestrian with the fixed aspect ratio is not accurate enough. 2. The detection box and the tracking box cannot capture a change of a posture of the pedestrian in a walking process: Because the pedestrian is in motion in the video, the posture of the pedestrian may greatly change in the walking process. This change is manifested as a change of an aspect ratio of a minimum bounding rectangular box of the pedestrian in a video image. The change of the posture of the pedestrian in the walking process cannot be captured based on the detection box with the fixed aspect ratio and the tracking box.

## SUMMARY

The present invention provides a pedestrian tracking method and an electronic device, so that tracking can be accurately implemented regardless of a change of a posture of a to-be-tracked pedestrian.

A first aspect of the embodiments of the present invention provides a pedestrian tracking method, including the following steps.

Step A: Determine a detection period and a tracking period of a to-be-tracked video.

Optionally, the detection period is included in the tracking period, and duration of the detection period is less than duration of the tracking period.

Optionally, the detection period shown in this embodiment may not be included in the tracking period, the detection period is before the tracking period, and duration of the detection period is less than duration of the tracking period.

Step B: Obtain an upper body detection box of a to-be-tracked pedestrian.

Specifically, the upper body detection box of the to-be-tracked pedestrian appearing in the to-be-tracked video is obtained within the detection period.

More specifically, a target image frame is first determined, and the target image frame is an image frame in which the to-be-tracked pedestrian appears.

When the target image frame is determined, the upper body detection box may be obtained in the target image frame.

Step C: Obtain a detection period whole body box of the to-be-tracked pedestrian.

Specifically, the detection period whole body box of the to-be-tracked pedestrian is obtained based on the upper body detection box.

Step D: Obtain an upper body tracking box of the to-be-tracked pedestrian.

Specifically, the upper body tracking box of the to-be-tracked pedestrian appearing in the to-be-tracked video is obtained within the tracking period.

In this embodiment, the detection period whole body box obtained within the detection period is initialized as a tracking target, so that the to-be-tracked pedestrian serving as the tracking target can be tracked within the tracking period.

Step E: Obtain a tracking period whole body box.

Specifically, the tracking period whole body box corresponding to the upper body tracking box is obtained based on the detection period whole body box.

The tracking period whole body box is used to track the to-be-tracked pedestrian.

By using the method shown in this embodiment, the obtained detection period whole body box is obtained based on the upper body detection box of the to-be-tracked pedestrian, and an aspect ratio of the detection period whole body box may change. Therefore, even if the to-be-tracked pedestrian appears in an abnormal posture within the detection period, an accurate tracking period whole body box of the to-be-tracked pedestrian can still be obtained by using the method shown in this embodiment, so that preparations can still be made to track the to-be-tracked pedestrian when the to-be-tracked pedestrian appears in the abnormal posture.

With reference to the first aspect of the embodiments of the present invention, in a first implementation of the first aspect of the embodiments of the present invention, before step C, the following steps are further performed.

Step C01: Obtain a lower body scanning area.

In this embodiment, after the upper body detection box of the to-be-tracked pedestrian is obtained, the lower body scanning area of the to-be-tracked pedestrian may be obtained based on the upper body detection box of the to-be-tracked pedestrian.

Step C02: Obtain the detection period whole body box.

Specifically, if a lower body detection box is obtained by performing lower body detection in the lower body scanning area, the detection period whole body box is obtained based on the upper body detection box and the lower body detection box.

By using the method shown in this embodiment, the obtained detection period whole body box is obtained by combining the upper body detection box of the to-be-tracked pedestrian and the lower body detection box of the to-be-tracked pedestrian. It can be learned that an aspect ratio of the obtained detection period whole body box may change. Therefore, even if the to-be-tracked pedestrian appears in an abnormal posture within the detection period, for example, in a posture that the legs of the to-be-tracked pedestrian are wide open, and therefore a proportion of the upper body to the lower body of the to-be-tracked pedestrian changes, an accurate detection period whole body box of the to-be-tracked pedestrian can still be obtained by combining the obtained upper body detection box and the obtained lower body detection box, so as to prepare to track the to-be-tracked pedestrian.

With reference to the first implementation of the first aspect of the embodiments of the present invention, in a second implementation of the first aspect of the embodiments of the present invention, the upper body detection box is

$\mathrm{RECT}_u^d = [L_u^d, T_u^d, R_u^d, B_u^d]$, where $L_u^d$ is an upper-left horizontal coordinate of the upper body detection box, $T_u^d$ is an upper-left vertical coordinate of the upper body detection box, $R_u^d$ is a lower-right horizontal coordinate of the upper body detection box, and $B_u^d$ is a lower-right vertical coordinate of the upper body detection box.

Step C01 specifically includes the following steps.

Step C011: Determine a first parameter.

The first parameter is $B_f^{estimate} = B_u^d - \left(B_u^d - T_u^d\right) * \left(1 - \dfrac{1}{\mathrm{Ratio}_{default}}\right)$, where Ratio_default is a preset ratio.

Optionally, Ratio_default in this embodiment is pre-stored, and Ratio_default may be preset based on an aspect ratio of a human body detection box. For example, if it is pre-determined that the aspect ratio of the human body detection box is 3:7, Ratio_default may be set to 3/7, and Ratio_default is stored, so that in a process of performing this step, Ratio_default can be extracted to calculate the first parameter $B_f^{estimate}$.

Step C012: Determine a second parameter.

The second parameter is $W_u^d = R_u^d - L_u^d$.

Step C013: Determine a third parameter.

The third parameter $H_f^{estimate}$ = the first parameter $B_f^{estimate} - T_u^d$.

Step C014: Determine the lower body scanning area.

Specifically, the lower body scanning area may be determined based on the first parameter, the second parameter, and the third parameter.

It can be learned that, when the first parameter, the second parameter, and the third parameter are obtained, the lower body scanning area may be determined, so that the lower body detection box of the to-be-tracked pedestrian is detected in the obtained lower body scanning area, thereby improving accuracy and efficiency of obtaining the lower body detection box of the to-be-tracked pedestrian, and improving efficiency of tracking the to-be-tracked pedestrian.

With reference to the second implementation of the first aspect of the embodiments of the present invention, in a third implementation of the first aspect of the embodiments of the present invention,

step C014 is specifically performed as follows: The lower body scanning area is determined based on the first parameter, the second parameter, and the third parameter, where the lower body scanning area is ScanArea = [$L^E$, $T^E$, $R^E$, $B^E$].

Specifically, $L^E$ is an upper-left horizontal coordinate of the lower body scanning area, $T^E$ is an upper-left vertical coordinate of the lower body scanning area, $R^E$ is a lower-right horizontal coordinate of the lower body scanning area, and $B^E$ is a lower-right vertical coordinate of the lower body scanning area.

More specifically, $L^s = \max\{1, \ L_u^d - W_u^d/paral1\}$ ,

$$T^s = \max\{1, \ T_u^d + H_f^{estimate}/paral2\},$$

$$R^s = \min\{imgW - 1, \ R_u^d + W_u^d/paral2\},$$

and

$$B^s = \min\{imgH - 1, \ B_f^{estimate} + H_f^{estimate}W_u^d/paral3\}.$$

paral1, paral2, and paral3 are preset values, and paral1, paral2, and paral3 may be empirical values, or operating staff may implement different settings of the lower body scanning area through different settings of paral1, paral2, and paral3

imgW is a width of any image frame of the to-be-tracked video within the detection period, and imgH is a height of any image frame of the to-be-tracked video within the detection period.

By using the method shown in this embodiment, the lower body detection box of the to-be-tracked pedestrian can be detected in the obtained lower body scanning area, so as to improve accuracy and efficiency of obtaining the lower body detection box of the to-be-tracked pedestrian, and improve efficiency of tracking the to-be-tracked pedestrian. In addition, in an obtaining process, different settings of the lower body scanning area may be implemented through different settings of the parameters (paral1, paral2, and paral3), so as to achieve high applicability of the method shown in this embodiment. In this way, in different application scenarios, different orientations of the lower body detection box may be implemented based on different settings of the parameters, so as to improve accuracy of detecting the to-be-tracked pedestrian.

With reference to the method according to any one of the first implementation of the first aspect of the embodiments of the present invention to the third implementation of the first aspect of the embodiments of the present invention, in a fourth implementation of the first aspect of the embodiments of the present invention,

the lower body detection box is $RECT_l^d = [L_l^d, T_l^d, R_l^d, B_l^d]$, where

$L_l^d$ is an upper-left horizontal coordinate of the lower body detection box, $T_l^d$ is an upper-left vertical coordinate of the lower body detection box, $R_l^d$ is a lower-right horizontal coordinate of the lower body detection box, and $B_l^d$ is a lower-right vertical coordinate of the lower body detection box.

Step C includes the following steps.

Step C11: Determine an upper-left horizontal coordinate of the detection period whole body box.

Specifically, the upper-left horizontal coordinate of the detection period whole body box is $L_f^d = \min(L_u^d, L_l^d)$.

Step C12: Determine an upper-left vertical coordinate of the detection period whole body box.

Specifically, the upper-left vertical coordinate of the detection period whole body box is $T_f^d = T_u^d$.

Step C13: Determine a lower-right horizontal coordinate of the detection period whole body box.

Specifically, the lower-right horizontal coordinate of the detection period whole body box is

$$R_f^d = \max\ (R_u^d,\ R_l^d)$$.

Step C14: Determine a lower-right vertical coordinate of the detection period whole body box.

Specifically, the lower-right vertical coordinate of the detection period whole body box is $B_f^d = B_l^d$.

Step C15: Determine the detection period whole body box.

Specifically, the detection period whole body box is

$$\mathrm{RECT}_f^d = [L_f^d, T_f^d, R_f^d, B_f^d]$$.

It can be learned that by using the method shown in this embodiment, the obtained detection period whole body box is obtained by combining the upper body detection box of the to-be-tracked pedestrian and the lower body detection box of the to-be-tracked pedestrian, so that even if the to-be-tracked pedestrian appears in an abnormal posture, for example, the legs are wide open, and therefore an aspect ratio increases, an accurate detection period whole body box can be obtained because in this embodiment, the upper body and the lower body of the to-be-tracked pedestrian can be separately detected, to separately obtain the upper body detection box of the to-be-tracked pedestrian and the lower body detection box of the to-be-tracked pedestrian, in other words, a proportion of the upper body detection box to the lower body detection box in the detection period whole body box varies with a posture of the to-be-tracked pedestrian. It can be learned that a change of a posture of the to-be-tracked pedestrian in a walking process can be accurately captured based on the proportion of the upper body detection box to the lower body detection box that may change, so as to effectively avoid a case in which the to-be-tracked pedestrian cannot be tracked because of a change of a posture of the to-be-tracked pedestrian.

With reference to the fourth implementation of the first aspect of the embodiments of the present invention, in a fifth implementation of the first aspect of the embodiments of the present invention,

after step C, the following steps further need to be performed.

Step D01: Determine a ratio of a width of the detection period whole body box to a height of the detection period whole body box.

Specifically, the ratio of the width of the detection period whole body box to the height of the detection period whole body box is $\mathrm{Ratio}_{wh}^d = \dfrac{R_f^d - L_f^d}{B_f^d - T_f^d}$

Step D02: Determine a ratio of a height of the upper body detection box to the height of the detection period whole body box.

Specifically, the ratio of the height of the upper body detection box to the height of the detection period whole

body box is $\mathrm{Ratio}_{hh}^d = \dfrac{B_u^d - T_u^d}{B_f^d - T_f^d}$.

Step D03: Determine the tracking period whole body box.

Specifically, the tracking period whole body box is determined based on $\mathrm{Ratio}_{wh}^d$ and $\mathrm{Ratio}_{hh}^d$.

By using the method shown in this embodiment, the tracking period whole body box can be determined based on the ratio of the width of the detection period whole body box to the height of the detection period whole body box and the ratio of the height of the upper body detection box to the height of the detection period whole body box. Because the detection period whole body box can accurately capture a change of a posture of the to-be-tracked pedestrian, a change of a posture of the to-be-tracked pedestrian in a walking process can be accurately captured based on the tracking period whole body box obtained by using the detection period whole body box, so as to improve accuracy of tracking the to-be-tracked pedestrian by using the tracking period whole body box, and effectively avoid a case in which the to-be-tracked pedestrian cannot be tracked because of a change of a posture of the to-be-tracked pedestrian.

With reference to the method according to the second implementation of the first aspect of the embodiments of the present invention or the third implementation of the first aspect of the embodiments of the present invention, in a sixth implementation of the first aspect of the embodiments of the present invention,

after step C01, the following steps further need to be performed.

Step C21: Determine an upper-left horizontal coordinate of the detection period whole body box.

Specifically, if the lower body detection box is not obtained by performing lower body detection in the lower body scanning area, the upper-left horizontal coordinate of the detection period whole body box is determined.

More specifically, the upper-left horizontal coordinate of the detection period whole body box is $L_f^d = L_u^d$.

Step C22: Determine an upper-left vertical coordinate of the detection period whole body box.

Specifically, the upper-left vertical coordinate of the detection period whole body box is $T_f^d = T_u^d$.

Step C23: Determine a lower-right horizontal coordinate of the detection period whole body box.

Specifically, the lower-right horizontal coordinate of the detection period whole body box is $R_f^d = R_u^d$.

Step C24: Determine a lower-right vertical coordinate of the detection period whole body box.

Specifically, the lower-right vertical coordinate of the detection period whole body box is $B_f^d = \left(R_u^d - L_u^d\right) * \text{Ratio}_{default} + T_u^d$.

Step C25: Determine that the detection period whole body box is

$$\text{RECT}_f^d = [L_f^d, T_f^d, R_f^d, B_f^d].$$

It can be learned that by using the method shown in this embodiment, even if the lower body detection box is not obtained in the lower body scanning area, the lower body detection box may be calculated based on the upper body detection box, so that the detection period whole body box can still be obtained when the lower body detection box is not detected, thereby effectively ensuring tracking of the to-be-tracked pedestrian, and avoiding a case in which the to-be-tracked pedestrian cannot be tracked because the lower body of the to-be-tracked pedestrian cannot be detected. In addition, a change of a posture of the to-be-tracked pedestrian in a walking process can be accurately captured, so as to avoid a case in which the to-be-tracked pedestrian cannot be tracked because of a change of a posture of the to-be-tracked pedestrian.

With reference to the sixth implementation of the first aspect of the embodiments of the present invention, in a seventh implementation of the first aspect of the embodiments of the present invention, the method further includes the following steps.

Step C31: Obtain a preset ratio of a width of the detection period whole body box to a height of the detection period whole body box.

Specifically, the preset ratio of the width of the detection period whole body box to the height of the detection period whole body box is $\text{Ratio}_{wh}^d$.

Step C32: Determine a ratio of a height of the upper body detection box to the height of the detection period whole body box.

Specifically, the ratio of the height of the upper body detection box to the height of the detection period whole body box is $\text{Ratio}_{hh}^d = \frac{B_u^d - T_u^d}{B_f^d - T_f^d}$.

Step C33: Determine the tracking period whole body box based on $\text{Ratio}_{wh}^d$ and $\text{Ratio}_{hh}^d$.

It can be learned that by using the method shown in this embodiment, even if the lower body detection box is not obtained in the lower body scanning area, the tracking period whole body box can still be obtained, so as to effectively ensure tracking of the to-be-tracked pedestrian.

With reference to the method according to the fifth implementation of the first aspect of the embodiments of the present invention or the seventh implementation of the first aspect of the embodiments of the present invention, in an eighth implementation of the first aspect of the embodiments of the present invention,

the upper body tracking box is $\text{RECT}_u^t = [L_u^t, T_u^t, R_u^t, B_u^t]$, where $L_u^t$ is an upper-left horizontal coordinate of the upper body tracking box, $T_u^t$ is an upper-left vertical coordinate of the upper body tracking box, $R_u^t$ is a lower-right horizontal coordinate of the upper body tracking box, and $B_u^t$ is a lower-right vertical coordinate of the upper body tracking box.

Step C33 specifically includes the following steps.

Step C331: Determine an upper-left horizontal coordinate of the tracking period whole body box.

Specifically, if $L_f^d = L_u^d$, the upper-left horizontal coordinate of the tracking period whole body box is $L_f^t = L_u^t$.

Step C332: Determine an upper-left vertical coordinate of the tracking period whole body box.

Specifically, the upper-left vertical coordinate of the tracking period whole body box is $T_f^t = T_u^t$.

Step C333: Determine a lower-right horizontal coordinate of the tracking period whole body box.

Specifically, the lower-right horizontal coordinate of the tracking period whole body box is $R_f^t = L_f^t + W_f^t$.

Step C334: Determine a lower-right vertical coordinate of the tracking period whole body box.

Specifically, the lower-right vertical coordinate of the tracking period whole body box is $B_f^t = \dfrac{B_u^t - T_u^t}{Ratio_{hh}^d} + T_f^t$.

More specifically, $W_f^t = (B_f^t - T_f^t) * Ratio_{wh}^d$.

Step C335: Determine the tracking period whole body box.

Specifically, the tracking period whole body box is

$$RECT_f^t = [L_f^t, T_f^t, R_f^t, B_f^t]$$

By using the method shown in this embodiment, when the upper-left horizontal coordinate $L_f^d$ of the detection period whole body box is equal to an upper-left horizontal coordinate $L_u^d$ of the upper body detection box, the tracking period whole body box can be calculated. In this way, even if a posture of the to-be-tracked pedestrian greatly changes, the tracking period whole body box can still be obtained, so as to avoid a case in which the to-be-tracked pedestrian cannot be tracked, and improve accuracy of tracking the to-be-tracked pedestrian.

With reference to the method according to any one of the first aspect of the embodiments of the present invention to the eighth implementation of the first aspect of the embodiments of the present invention, in a ninth implementation of the first aspect of the embodiments of the present invention,
step D specifically includes the following steps.

Step D11: Scatter a plurality of particles by using the upper body detection box as a center.

Specifically, the plurality of particles are scattered by using the upper body detection box as a center, and a ratio of a width to a height of any one of the plurality of particles is the same as a ratio of a width of the upper body detection box to the height of the upper body detection box.

If the upper body detection box is determined within the detection period of the to-be-tracked video, the to-be-tracked pedestrian is tracked within the tracking period of the to-be-tracked video. The to-be-tracked pedestrian is in motion in the to-be-tracked video, and locations of the to-be-tracked pedestrian within the detection period and the tracking period are different. Therefore, to track the to-be-tracked pedestrian, a plurality of particles need to be scattered around the upper body detection box of the to-be-tracked pedestrian, to track the to-be-tracked pedestrian.

Step D12: Determine the upper body tracking box.

Specifically, the upper body tracking box is a particle most similar to the upper body detection box among the plurality of particles.

By using the method shown in this embodiment, the plurality of particles are scattered by using the upper body detection box as the center, so that an accurate upper body tracking box can be obtained within the tracking period. In addition, the upper body tracking box is obtained by using the upper body detection box, so that different postures of the to-be-tracked pedestrian can be matched, thereby accurately tracking the to-be-tracked pedestrian.

With reference to the eighth implementation of the first aspect of the embodiments of the present invention, in a tenth implementation of the first aspect of the embodiments of the present invention,
step E specifically includes the following steps.

Step E11: Determine the upper-left horizontal coordinate of the tracking period whole body box.

Specifically, if $L_f^d = L_l^d$, the upper-left horizontal coordinate of the tracking period whole body box is

$L_f^t = R_f^t - W_f^t$.

Step E12: Determine the upper-left vertical coordinate of the tracking period whole body box.

Specifically, the upper-left vertical coordinate of the tracking period whole body box is $T_f^t = T_u^t$.

Step E13: Determine the lower-right horizontal coordinate of the tracking period whole body box.

Specifically, the lower-right horizontal coordinate of the tracking period whole body box is $R_f^t = R_u^t$.

Step E14: Determine the lower-right vertical coordinate of the tracking period whole body box.

Specifically, the lower-right vertical coordinate of the tracking period whole body box is $B_f^t = \frac{B_u^t - T_u^t}{Ratio_{hh}^d} + T_f^t$.

More specifically, $W_f^t = (B_f^t - T_f^t) * Ratio_{wh}^d$.

Step E15: Determine the tracking period whole body box.

Specifically, the tracking period whole body box is

$$RECT_f^t = [L_f^t, \quad T_f^t, R_f^t, B_f^t].$$

By using the method shown in this embodiment, when the upper-left horizontal coordinate $L_f^d$ of the detection period whole body box is equal to an upper-left horizontal coordinate $L_l^d$ of the lower body detection box, the tracking period whole body box can be calculated. In this way, even if a posture of the to-be-tracked pedestrian greatly changes, the tracking period whole body box can still be obtained, so as to avoid a case in which the to-be-tracked pedestrian cannot be tracked, and improve accuracy of tracking the to-be-tracked pedestrian.

With reference to the method according to any one of the first aspect of the embodiments of the present invention to the tenth implementation of the first aspect of the embodiments of the present invention, in an eleventh implementation of the first aspect of the embodiments of the present invention,

the method further includes the following steps.

Step E21: Obtain a target image frame sequence of the to-be-tracked video.

The target image frame sequence includes one or more consecutive image frames, and the target image frame sequence is before the detection period.

Step E22: Obtain a background area of the to-be-tracked video based on the target image frame sequence.

Specifically, in any image frame in the target image frame sequence, a still object is obtained by using a static background model, and the still object is determined as the background area of the to-be-tracked video.

Step E23: Obtain a foreground area of any image frame of the to-be-tracked video.

Specifically, the foreground area of the image frame of the to-be-tracked video is obtained by subtracting the background area from the image frame of the to-be-tracked video within the detection period.

Specifically, when the background area of the to-be-tracked video is obtained, a difference between any area of the image frame of the to-be-tracked video and the background area is obtained, to obtain a target value. It can be learned that different areas of the image frame of the to-be-tracked video are each corresponding to one target value.

If the target value is greater than or equal to a preset threshold, it indicates that an area that is of the image frame of the to-be-tracked video and that is corresponding to the target value is a motion area.

When the motion area is detected, the motion area is determined as the foreground area of the image frame of the to-be-tracked video.

Step E24: Obtain the to-be-tracked pedestrian.

Specifically, the to-be-tracked pedestrian is obtained by detecting the foreground area of the image frame of the to-be-tracked video.

With reference to the eleventh implementation of the first aspect of the embodiments of the present invention, in a twelfth implementation of the first aspect of the embodiments of the present invention,

step B includes the following steps.

Step B11: Determine a target image frame.

Specifically, the target image frame is an image frame in which the to-be-tracked pedestrian appears.

Step B12: Obtain the upper body detection box in a foreground area of the target image frame.

It can be learned that by using the method shown in this embodiment, the to-be-tracked pedestrian may be detected and tracked in the foreground area of the image frame of the to-be-tracked video, in other words, both a detection process and a tracking process of the to-be-tracked pedestrian that are shown in this embodiment are executed in the foreground area of the image. Therefore, a quantity of image windows that need to be processed is greatly reduced, in other words, search space for searching for the to-be-tracked pedestrian is reduced, so as to reduce duration required for tracking the to-be-tracked pedestrian, and improve efficiency of tracking the to-be-tracked pedestrian.

A second aspect of the embodiments of the present invention provides an electronic device, including a first determining unit, a first obtaining unit, a second obtaining unit, a third obtaining unit, and a fourth obtaining unit.

The first determining unit is configured to determine a detection period and a tracking period of a to-be-tracked video.

The first determining unit shown in this embodiment is configured to perform step A shown in the first aspect of the embodiments of the present invention. For a specific execution process, refer to the first aspect of the embodiments of the present invention. Details are not described.

The first obtaining unit is configured to obtain, within the detection period, an upper body detection box of a to-be-tracked pedestrian appearing in the to-be-tracked video.

The first obtaining unit shown in this embodiment is configured to perform step B shown in the first aspect of the embodiments of the present invention. For a specific execution process, refer to the first aspect of the embodiments of the present invention. Details are not described.

The second obtaining unit is configured to obtain a detection period whole body box of the to-be-tracked pedestrian based on the upper body detection box.

The second obtaining unit shown in this embodiment is configured to perform step C shown in the first aspect of the embodiments of the present invention. For a specific execution process, refer to the first aspect of the embodiments of the present invention. Details are not described.

The third obtaining unit is configured to obtain, within the tracking period, an upper body tracking box of the to-be-tracked pedestrian appearing in the to-be-tracked video.

The third obtaining unit shown in this embodiment is configured to perform step D shown in the first aspect of the embodiments of the present invention. For a specific execution process, refer to the first aspect of the embodiments of the present invention. Details are not described.

The fourth obtaining unit is configured to obtain, based on the detection period whole body box, a tracking period whole body box corresponding to the upper body tracking box, where the tracking period whole body box is used to track the to-be-tracked pedestrian.

The fourth obtaining unit shown in this embodiment is configured to perform step E shown in the first aspect of the embodiments of the present invention. For a specific execution process, refer to the first aspect of the embodiments of the present invention. Details are not described.

By using the electronic device shown in this embodiment, the obtained detection period whole body box is obtained based on the upper body detection box of the to-be-tracked pedestrian, and an aspect ratio of the detection period whole body box may change. Therefore, even if the to-be-tracked pedestrian appears in an abnormal posture within the detection period, an accurate tracking period whole body box of the to-be-tracked pedestrian can still be obtained by using the method shown in this embodiment, so that preparations can still be made to track the to-be-tracked pedestrian when the to-be-tracked pedestrian appears in the abnormal posture.

With reference to the second aspect of the embodiments of the present invention, in a first implementation of the second aspect of the embodiments of the present invention, the electronic device further includes:

the second obtaining unit is specifically configured to: obtain a lower body scanning area based on the upper body detection box; and if a lower body detection box is obtained by performing lower body detection in the lower body scanning area, obtain the detection period whole body box based on the upper body detection box and the lower body detection box.

The second obtaining unit shown in this embodiment is configured to perform step C01 and step C02 shown in the first aspect of the embodiments of the present invention. For a specific execution process, refer to the first aspect of the embodiments of the present invention. Details are not described.

By using the electronic device shown in this embodiment, the obtained detection period whole body box is obtained by combining the upper body detection box of the to-be-tracked pedestrian and the lower body detection box of the to-be-tracked pedestrian. It can be learned that an aspect ratio of the obtained detection period whole body box may change. Therefore, even if the to-be-tracked pedestrian appears in an abnormal posture within the detection period, for example, in a posture that the legs of the to-be-tracked pedestrian are wide open, and therefore a proportion of the upper body to the lower body of the to-be-tracked pedestrian changes, an accurate detection period whole body box of the to-be-tracked pedestrian can still be obtained by combining the obtained upper body detection box and the obtained lower body detection box, so as to prepare to track the to-be-tracked pedestrian.

With reference to the first implementation of the second aspect of the embodiments of the present invention, in a second implementation of the second aspect of the embodiments of the present invention,

the upper body detection box is $\mathrm{RECT_u^d} = \left[\mathrm{L_u^d}, \mathrm{T_u^d}, \mathrm{R_u^d}, \mathrm{B_u^d}\right]$, where $\mathrm{L_u^d}$ is an upper-left horizontal coordinate of the upper body detection box, $\mathrm{T_u^d}$ is an upper-left vertical coordinate of the upper body detection box, $\mathrm{R_u^d}$ is a lower-right horizontal coordinate of the upper body detection box, and $\mathrm{B_u^d}$ is a lower-right vertical coordinate of the upper body detection box; and

when obtaining the lower body scanning area based on the upper body detection box, the second obtaining unit is specifically configured to: determine a first parameter, where the first parameter is

$$B_f^{estimate} = B_u^d - \left(B_u^d - T_u^d\right) * \left(1 - \frac{1}{Ratio_{default}}\right) ,$$

where $Ratio_{default}$ is a preset ratio; determine a second parameter, where the second parameter is $W_u^d = R_u^d - L_u^d$; determine a third parameter, where the third parameter is $H_f^{estimate}$ =the first parameter $B_f^{estimate}$ _ $T_u^d$; and determine the lower body scanning area based on the first parameter, the second parameter, and the third parameter.

The second obtaining unit shown in this embodiment is configured to perform step C011, step C012, step C013, and step C014 shown in the first aspect of the embodiments of the present invention. For a specific execution process, refer to the first aspect of the embodiments of the present invention. Details are not described.

It can be learned that, when obtaining the first parameter, the second parameter, and the third parameter, the electronic device shown in this embodiment may determine the lower body scanning area, so that the lower body detection box of the to-be-tracked pedestrian is detected in the obtained lower body scanning area, thereby improving accuracy and efficiency of obtaining the lower body detection box of the to-be-tracked pedestrian, and improving efficiency of tracking the to-be-tracked pedestrian.

With reference to the second implementation of the second aspect of the embodiments of the present invention, in a third implementation of the second aspect of the embodiments of the present invention, when obtaining the lower body scanning area based on the upper body detection box, the second obtaining unit is specifically configured to determine the lower body scanning area based on the first parameter, the second parameter, and the third parameter, where the lower body scanning area is ScanArea = [$L^E$, $T^E$, $R^E$, $B^E$], $L^E$ is an upper-left horizontal coordinate of the lower body scanning area, $T^E$ is an upper-left vertical coordinate of the lower body scanning area, $R^E$ is a lower-right horizontal coordinate of the lower body scanning area, and $B^E$ is a lower-right vertical coordinate of the lower body scanning area, where

$$L^s = \max \left\{ 1, \ L_u^d - W_u^d/paral1 \right\} ,$$

$$T^s = \max \left\{ 1, \ T_u^d + H_f^{estimate}/paral2 \right\} ,$$

$$R^s = \min \left\{ imgW - 1, \ R_u^d + W_u^d/paral2 \right\} ,$$

and

$$B^s = \min \left\{ imgH - 1, \ B_f^{estimate} + H_f^{estimate} W_u^d/paral3 \right\} ;$$

and

paral1, paral2, and paral3 are preset values, imgW is a width of any image frame of the to-be-tracked video within the detection period, and imgH is a height of any image frame of the to-be-tracked video within the detection period.

The second obtaining unit shown in this embodiment is configured to perform step C014 shown in the first aspect of the embodiments of the present invention. For a specific execution process, refer to the first aspect of the embodiments of the present invention. Details are not described.

By using the electronic device shown in this embodiment, the lower body detection box of the to-be-tracked pedestrian can be detected in the obtained lower body scanning area, so as to improve accuracy and efficiency of obtaining the lower body detection box of the to-be-tracked pedestrian, and improve efficiency of tracking the to-be-tracked pedestrian. In addition, in an obtaining process, different settings of the lower body scanning area may be implemented through different settings of the parameters (paral1, paral2, and paral3), so as to achieve high applicability of the method shown in this embodiment. In this way, in different application scenarios, different orientations of the lower body detection box may be implemented based on different settings of the parameters, so as to improve accuracy of detecting the to-be-tracked pedestrian.

With reference to the method according to any one of the first implementation of the second aspect of the embodiments of the present invention to the third implementation of the second aspect of the embodiments of the present invention, in a fourth implementation of the second aspect of the embodiments of the present invention,

the lower body detection box is $RECT_l^d = [L_l^d, T_l^d, R_l^d, B_l^d]$, where $L_l^d$ is an upper-left horizontal coordinate of the lower body detection box, $T_l^d$ is an upper-left vertical coordinate of the lower body detection box, $R_l^d$ is a lower-right horizontal coordinate of the lower body detection box, and $B_l^d$ is a lower-right vertical coordinate of the lower body detection box; and

when obtaining the detection period whole body box of the to-be-tracked pedestrian based on the upper body detection box, the second obtaining unit is specifically configured to: determine an upper-left horizontal coordinate of the detection period whole body box, where the upper-left horizontal coordinate of the detection period whole body box is $L_f^d = \min(L_u^d, L_l^d)$, determine that an upper-left vertical coordinate of the detection period whole body box is $T_f^d = T_u^d$; determine that a lower-right horizontal coordinate of the detection period whole body box is $R_f^d = \max\ (R_u^d,\ R_l^d)$; determine that a lower-right vertical coordinate of the detection period whole body box is $B_f^d = B_l^d$, and determine that the detection period whole body box is $RECT_f^d = [L_f^d, T_f^d, R_f^d, B_f^d]$.

The second obtaining unit shown in this embodiment is configured to perform step C11, step C12, step C13, step C14, and step C15 shown in the first aspect of the embodiments of the present invention. For a specific execution process, refer to the first aspect of the embodiments of the present invention. Details are not described.

It can be learned that by using the electronic device shown in this embodiment, the obtained detection period whole body box is obtained by combining the upper body detection box of the to-be-tracked pedestrian and the lower body detection box of the to-be-tracked pedestrian, so that even if the to-be-tracked pedestrian appears in an abnormal posture, for example, the legs are wide open, and therefore an aspect ratio increases, an accurate detection period whole body box can be obtained because in this embodiment, the upper body and the lower body of the to-be-tracked pedestrian can be separately detected, to separately obtain the upper body detection box of the to-be-tracked pedestrian and the lower body detection box of the to-be-tracked pedestrian, in other words, a proportion of the upper body detection box to the lower body detection box in the detection period whole body box varies with a posture of the to-be-tracked pedestrian. It can be learned that a change of a posture of the to-be-tracked pedestrian in a walking process can be accurately captured based on the proportion of the upper body detection box to the lower body detection box that may change, so as to effectively avoid a case in which the to-be-tracked pedestrian cannot be tracked because of a change of a posture of the to-be-tracked pedestrian.

With reference to the fourth implementation of the second aspect of the embodiments of the present invention, in a fifth implementation of the second aspect of the embodiments of the present invention, the fourth obtaining unit is specifically configured to: determine that a ratio of a width of the detection period whole body box to a height of the detection period whole body box is $Ratio_{wh}^d = \frac{R_f^d - L_f^d}{B_f^d - T_f^d}$; determine that a ratio of a height of the upper body detection box to the height of the detection period whole body box is $Ratio_{hh}^d = \frac{B_u^d - T_u^d}{B_f^d - T_f^d}$; and determine the tracking period whole body box based on $Ratio_{wh}^d$ and $Ratio_{hh}^d$.

The fourth obtaining unit shown in this embodiment is configured to perform step D01, step D02, and step D03 shown in the first aspect of the embodiments of the present invention. For a specific execution process, refer to the first aspect of the embodiments of the present invention. Details are not described.

By using the electronic device shown in this embodiment, the tracking period whole body box can be determined based on the ratio of the width of the detection period whole body box to the height of the detection period whole body box and the ratio of the height of the upper body detection box to the height of the detection period whole body box. Because the detection period whole body box can accurately capture a change of a posture of the to-be-tracked pedestrian, a change of a posture of the to-be-tracked pedestrian in a walking process can be accurately captured based on the tracking period whole body box obtained by using the detection period whole body box, so as to improve accuracy of tracking the to-be-tracked pedestrian by using the tracking period whole body box, and effectively avoid a case in which the to-be-tracked pedestrian cannot be tracked because of a change of a posture of the to-be-tracked pedestrian.

With reference to the method according to the second implementation of the second aspect of the embodiments of the present invention or the third implementation of the second aspect of the embodiments of the present invention, in a sixth implementation of the second aspect of the embodiments of the present invention, when obtaining the detection period whole body box of the to-be-tracked pedestrian based on the upper body detection box, the second obtaining unit is specifically configured to: if the lower body detection box is not obtained by performing lower body detection in the lower body scanning area, determine an upper-left horizontal coordinate of the detection period whole body box, where the upper-left horizontal coordinate of the detection period whole body box is $L_f^d = L_u^d$; determine that an upper-left vertical coordinate of the detection period whole body box is $T_f^d = T_u^d$; determine that a lower-right horizontal coordinate of the detection period whole body box is $R_f^d = R_u^d$; determine that a lower-right vertical coordinate of the detection period whole body box is $B_f^d = \left(R_u^d - L_u^d\right) * \text{Ratio}_{default} + T_u^d$; and determine that the detection period whole body box is $\text{RECT}_f^d = [L_f^d, T_f^d, R_f^d, B_f^d]$.

The second obtaining unit shown in this embodiment is configured to perform step C21, step C22, step C23, and step C24 shown in the first aspect of the embodiments of the present invention. For a specific execution process, refer to the first aspect of the embodiments of the present invention. Details are not described.

It can be learned that by using the electronic device shown in this embodiment, even if the lower body detection box is not obtained in the lower body scanning area, the lower body detection box may be calculated based on the upper body detection box, so that the detection period whole body box can still be obtained when the lower body detection box is not detected, thereby effectively ensuring tracking of the to-be-tracked pedestrian, and avoiding a case in which the to-be-tracked pedestrian cannot be tracked because the lower body of the to-be-tracked pedestrian cannot be detected. In addition, a change of a posture of the to-be-tracked pedestrian in a walking process can be accurately captured, so as to avoid a case in which the to-be-tracked pedestrian cannot be tracked because of a change of a posture of the to-be-tracked pedestrian.

With reference to the sixth implementation of the second aspect of the embodiments of the present invention, in a seventh implementation of the second aspect of the embodiments of the present invention, the fourth obtaining unit is specifically configured to: obtain a preset ratio $\text{Ratio}_{wh}^d$ of a width of the detection period whole body box to a height of the detection period whole body box; determine that a ratio of a height of the upper body detection box to the height of the detection period whole body box is $\text{Ratio}_{hh}^d = \frac{B_u^d - T_u^d}{B_f^d - T_f^d}$; and determine the tracking period whole body box based on $\text{Ratio}_{wh}^d$ and $\text{Ratio}_{hh}^d$.

The fourth obtaining unit shown in this embodiment is configured to perform step C31, step C32, and step C33 shown in the first aspect of the embodiments of the present invention. For a specific execution process, refer to the first aspect of the embodiments of the present invention. Details are not described.

It can be learned that by using the electronic device shown in this embodiment, even if the lower body detection box is not obtained in the lower body scanning area, the tracking period whole body box can still be obtained, so as to effectively ensure tracking of the to-be-tracked pedestrian.

With reference to the method according to the fifth implementation of the second aspect of the embodiments of the present invention or the seventh implementation of the second aspect of the embodiments of the present invention, in an eighth implementation of the second aspect of the embodiments of the present invention, the upper body tracking box is $\text{RECT}_u^t = [L_u^t, T_u^t, R_u^t, B_u^t]$, where $L_u^t$ is an upper-left horizontal coordinate of the upper body tracking box, $T_u^t$ is an upper-left vertical coordinate of the upper body tracking box, $R_u^t$ is a lower-right horizontal coordinate of the upper body tracking box, and $B_u^t$ is a lower-right vertical coordinate of the upper body tracking box; and

when determining the tracking period whole body box based on $\text{Ratio}_{wh}^d$ and $\text{Ratio}_{hh}^d$, the fourth obtaining unit is specifically configured to: determine an upper-left horizontal coordinate of the tracking period whole body box, where if $L_f^d = L_u^d$, the upper-left horizontal coordinate of the tracking period whole body box is $L_f^t = L_u^t$; determine that an upper-left vertical coordinate of the tracking period whole body box is $T_f^t = T_u^t$; determine that a lower-right horizontal coordinate of the tracking period whole body box is $R_f^t = L_f^t + W_f^t$; determine that a lower-right vertical coordinate of the tracking period whole body box is $B_f^t = \frac{B_u^t - T_u^t}{Ratio_{hh}^d} + T_f^t$ where $W_f^t = (B_f^t - T_f^t) * Ratio_{wh}^d$; and determine that the tracking period whole body box is

$$RECT_f^t = [L_f^t, T_f^t, R_f^t, B_f^t].$$

The fourth obtaining unit shown in this embodiment is configured to perform step C331, step C332, step C333, step C334, and step C335 shown in the first aspect of the embodiments of the present invention. For a specific execution process, refer to the first aspect of the embodiments of the present invention. Details are not described.

By using the electronic device shown in this embodiment, when the upper-left horizontal coordinate $L_f^d$ of the detection period whole body box is equal to an upper-left horizontal coordinate $L_u^d$ of the upper body detection box, the tracking period whole body box can be calculated. In this way, even if a posture of the to-be-tracked pedestrian greatly changes, the tracking period whole body box can still be obtained, so as to avoid a case in which the to-be-tracked pedestrian cannot be tracked, and improve accuracy of tracking the to-be-tracked pedestrian.

With reference to the method according to any one of the second aspect of the embodiments of the present invention to the eighth implementation of the second aspect of the embodiments of the present invention, in a ninth implementation of the second aspect of the embodiments of the present invention,
the third obtaining unit is specifically configured to: scatter a plurality of particles by using the upper body detection box as a center, where a ratio of a width to a height of any one of the plurality of particles is the same as a ratio of a width of the upper body detection box to the height of the upper body detection box; and determine the upper body tracking box, where the upper body tracking box is a particle most similar to the upper body detection box among the plurality of particles.

The third obtaining unit shown in this embodiment is configured to perform step D11 and step D12 shown in the first aspect of the embodiments of the present invention. For a specific execution process, refer to the first aspect of the embodiments of the present invention. Details are not described.

By using the electronic device shown in this embodiment, the plurality of particles are scattered by using the upper body detection box as the center, so that an accurate upper body tracking box can be obtained within the tracking period. In addition, the upper body tracking box is obtained by using the upper body detection box, so that different postures of the to-be-tracked pedestrian can be matched, thereby accurately tracking the to-be-tracked pedestrian.

With reference to the eighth implementation of the second aspect of the embodiments of the present invention, in a tenth implementation of the second aspect of the embodiments of the present invention,
the fourth obtaining unit is specifically configured to: determine the upper-left horizontal coordinate of the tracking period whole body box, where if $L_f^d = L_l^d$, the upper-left horizontal coordinate of the tracking period whole body box is $L_f^t = R_f^t - W_f^t$; determine that the upper-left vertical coordinate of the tracking period whole body box is $T_f^t = T_u^t$; determine that the lower-right horizontal coordinate of the tracking period whole body box is $R_f^t = R_u^t$; determine that the lower-right vertical coordinate of the tracking period whole body box is $B_f^t = \frac{B_u^t - T_u^t}{Ratio_{hh}^d} + T_f^t$ where $W_f^t = (B_f^t - T_f^t) * Ratio_{wh}^d$; and determine that the tracking period whole body box is

$$RECT_f^t = [L_f^t, \; T_f^t, R_f^t, B_f^t].$$

The fourth obtaining unit shown in this embodiment is configured to perform step E11, step E12, step E13, step E14, and step E15 shown in the first aspect of the embodiments of the present invention. For a specific execution process, refer to the first aspect of the embodiments of the present invention. Details are not described.

By using the electronic device shown in this embodiment, when the upper-left horizontal coordinate $L_f^d$ of the detection period whole body box is equal to an upper-left horizontal coordinate $L_l^d$ of the lower body detection box, the tracking period whole body box can be calculated. In this way, even if a posture of the to-be-tracked pedestrian greatly changes, the tracking period whole body box can still be obtained, so as to avoid a case in which the to-be-tracked pedestrian cannot be tracked, and improve accuracy of tracking the to-be-tracked pedestrian.

With reference to the method according to any one of the second aspect of the embodiments of the present invention to the tenth implementation of the second aspect of the embodiments of the present invention, in an eleventh implementation of the second aspect of the embodiments of the present invention, the electronic device further includes a fifth obtaining unit, a sixth obtaining unit, a seventh obtaining unit, and an eighth obtaining unit.

The fifth obtaining unit is configured to obtain a target image frame sequence of the to-be-tracked video, where the target image frame sequence includes one or more consecutive image frames, and the target image frame sequence is before the detection period.

The fifth obtaining unit shown in this embodiment is configured to perform step E21 shown in the first aspect of the embodiments of the present invention. For a specific execution process, refer to the first aspect of the embodiments of the present invention. Details are not described.

The sixth obtaining unit is configured to obtain a background area of the to-be-tracked video based on the target image frame sequence.

The sixth obtaining unit shown in this embodiment is configured to perform step E22 shown in the first aspect of the embodiments of the present invention. For a specific execution process, refer to the first aspect of the embodiments of the present invention. Details are not described.

The seventh obtaining unit is configured to obtain a foreground area of any image frame of the to-be-tracked video by subtracting the background area from the image frame of the to-be-tracked video within the detection period.

The seventh obtaining unit shown in this embodiment is configured to perform step E23 shown in the first aspect of the embodiments of the present invention. For a specific execution process, refer to the first aspect of the embodiments of the present invention. Details are not described.

The eighth obtaining unit is configured to obtain the to-be-tracked pedestrian by detecting the foreground area of the image frame of the to-be-tracked video.

The eighth obtaining unit shown in this embodiment is configured to perform step E24 shown in the first aspect of the embodiments of the present invention. For a specific execution process, refer to the first aspect of the embodiments of the present invention. Details are not described.

With reference to the eleventh implementation of the second aspect of the embodiments of the present invention, in a twelfth implementation of the second aspect of the embodiments of the present invention,

the first obtaining unit is specifically configured to: determine a target image frame, where the target image frame is an image frame in which the to-be-tracked pedestrian appears; and obtain the upper body detection box in a foreground area of the target image frame.

The first obtaining unit shown in this embodiment is configured to perform step B11 and step B12 shown in the first aspect of the embodiments of the present invention. For a specific execution process, refer to the first aspect of the embodiments of the present invention. Details are not described.

It can be learned that by using the electronic device shown in this embodiment, the to-be-tracked pedestrian may be detected and tracked in the foreground area of the image frame of the to-be-tracked video, in other words, both a detection process and a tracking process of the to-be-tracked pedestrian that are shown in this embodiment are executed in the foreground area of the image. Therefore, a quantity of image windows that need to be processed is greatly reduced, in other words, search space for searching for the to-be-tracked pedestrian is reduced, so as to reduce duration required for tracking the to-be-tracked pedestrian, and improve efficiency of tracking the to-be-tracked pedestrian.

The embodiments of the present invention provide the pedestrian tracking method and the electronic device. According to the method, the upper body detection box of the to-be-tracked pedestrian appearing in the to-be-tracked video can be obtained within the detection period; the detection period whole body box of the to-be-tracked pedestrian is obtained based on the upper body detection box; and the tracking period whole body box corresponding to an upper body tracking box is obtained within the tracking period based on the detection period whole body box. It can be learned that the to-be-tracked pedestrian may be tracked by using the tracking period whole body box. An aspect ratio of the detection period whole body box may change. Therefore, even if the to-be-tracked pedestrian appears in an abnormal posture within the detection period, an accurate tracking period whole body box of the to-be-tracked pedestrian can still be obtained by using the method shown in the embodiments, so that preparations can still be made to track the to-be-tracked pedestrian when the to-be-tracked pedestrian appears in the abnormal posture.

DESCRIPTION OF DRAWINGS

FIG. 1 is a schematic structural diagram of an embodiment of an electronic device according to the present invention;

FIG. 2 is a schematic structural diagram of an embodiment of a processor according to the present invention;

FIG. 3A and FIG. 3B are a flowchart of steps of an embodiment of a pedestrian tracking method according to the present invention;

FIG. 4 is a schematic application diagram of an embodiment of a pedestrian tracking method according to the present invention;

FIG. 5 is a schematic application diagram of another embodiment of a pedestrian tracking method according to the present invention;

FIG. 6 is a schematic application diagram of another embodiment of a pedestrian tracking method according to the present invention;

FIG. 7 is a schematic application diagram of another embodiment of a pedestrian tracking method according to the present invention;

FIG. 8 is a schematic application diagram of another embodiment of a pedestrian tracking method according to the present invention;

FIG. 9A and FIG. 9B are a flowchart of steps of an embodiment of a pedestrian query method according to the present invention;

FIG. 10A and FIG. 10B are a schematic diagram of execution steps of an embodiment of a pedestrian query method according to the present invention; and

FIG. 11 is a schematic structural diagram of another embodiment of an electronic device according to the present invention.

## DESCRIPTION OF EMBODIMENTS

The embodiments of the present invention provide a pedestrian tracking method. To better understand the pedestrian tracking method shown in the embodiments of the present invention, the following first describes in detail a specific structure of an electronic device that can perform the method shown in the embodiments of the present invention.

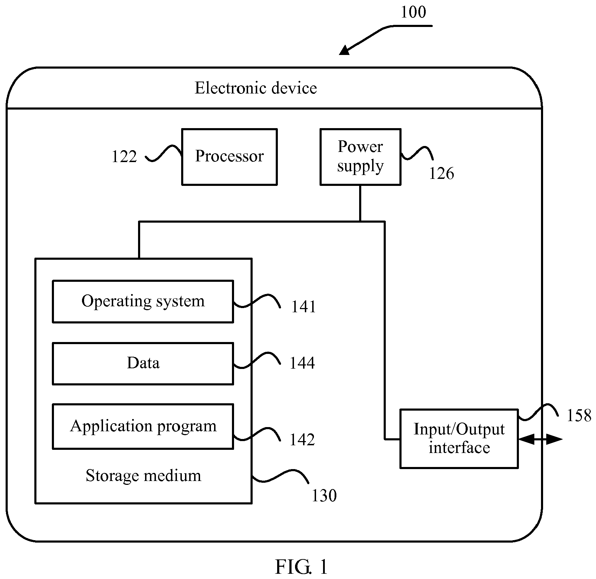

The specific structure of the electronic device shown in the embodiments is described below in detail with reference to FIG. 1. FIG. 1 is a schematic structural diagram of an embodiment of an electronic device according to the present invention.

The electronic device 100 may greatly vary with configuration or performance, and may include one or more processors 122.

The processor 122 is not limited in this embodiment, provided that the processor 122 can have computing and image processing capabilities to perform the pedestrian tracking method shown in the embodiments. Optionally, the processor 122 shown in this embodiment may be a central processing units (CPU).

One or more storage media 130 (for example, one or more massive storage devices) are configured to store an application program 142 or data 144.

The storage medium 130 may be a transient storage medium or a persistent storage medium. The program stored in the storage medium 130 may include one or more modules (which are not marked in the figure), and each module may include a series of instruction operations in the electronic device.

Further, the processor 122 may be configured to: communicate with the storage medium 130, and perform a series of instruction operations in the storage medium 130 in the electronic device 100.

The electronic device 100 may further include one or more power supplies 126, one or more input/output interfaces 158, and/or one or more operating systems 141 such as Windows ServerTM, Mac OS XTM, UnixTM, LinuxTM, and FreeBSDTM.

In an implementation of the present invention, the electronic device may be any device having an image processing capability and a computing capability, and includes, but is not limited to, a server, a camera, a mobile computer, a tablet computer, and the like.

If the electronic device shown in this embodiment performs the pedestrian tracking method shown in the embodiments, the input/output interface 158 shown in this embodiment may be configured to receive massive surveillance videos, and the input/output interface 158 can display a detection process, a pedestrian tracking result, and the like. The processor 122 is configured to perform pedestrian detection and execute a pedestrian tracking algorithm. The storage medium 130 is configured to store an operating system, an application program, and the like, and the storage medium 130 can store an intermediate result in a pedestrian tracking process, and the like. It can be learned that in a process of performing the method shown in the embodiments, the electronic device shown in this embodiment can find a target pedestrian that needs to be tracked from the massive surveillance videos, and provide information such as a time and a place at which the target pedestrian appears in the surveillance video.

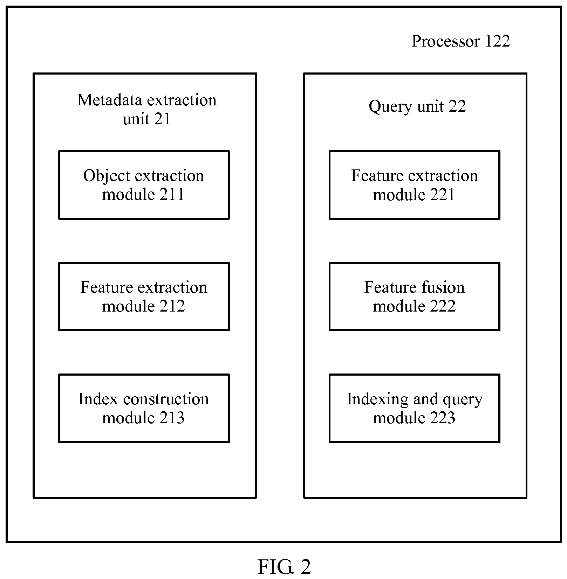

A specific structure of the processor 122 configured to implement the pedestrian tracking method shown in the embodiments is described below in detail with reference to FIG. 2.

Specifically, the processor 122 includes a metadata extraction unit 21 and a query unit 22.

More specifically, the metadata extraction unit 21 includes an object extraction module 211, a feature extraction module 212, and an index construction module 213.

More specifically, the query unit 22 includes a feature extraction module 221, a feature fusion module 222, and an indexing and query module 223.

In this embodiment, the processor 122 can execute the program stored in the storage medium 130, to implement a function of any module in any unit included in the processor 122 shown in FIG. 2.

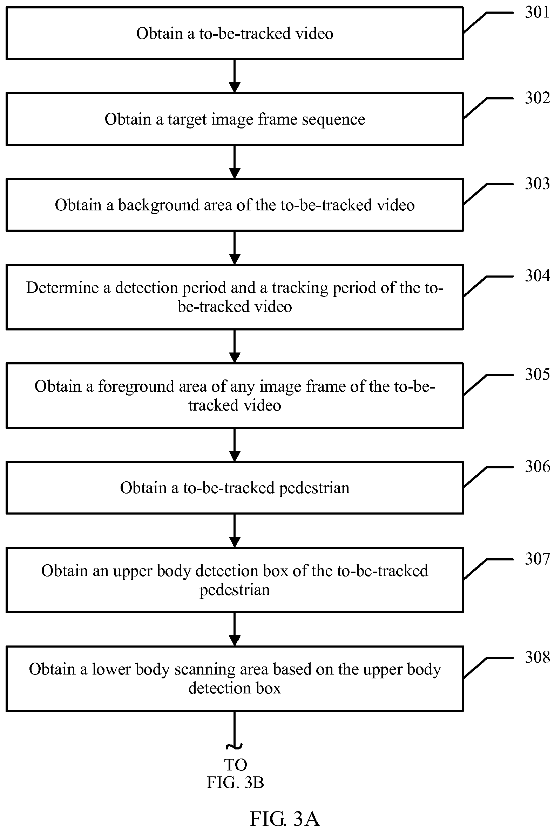

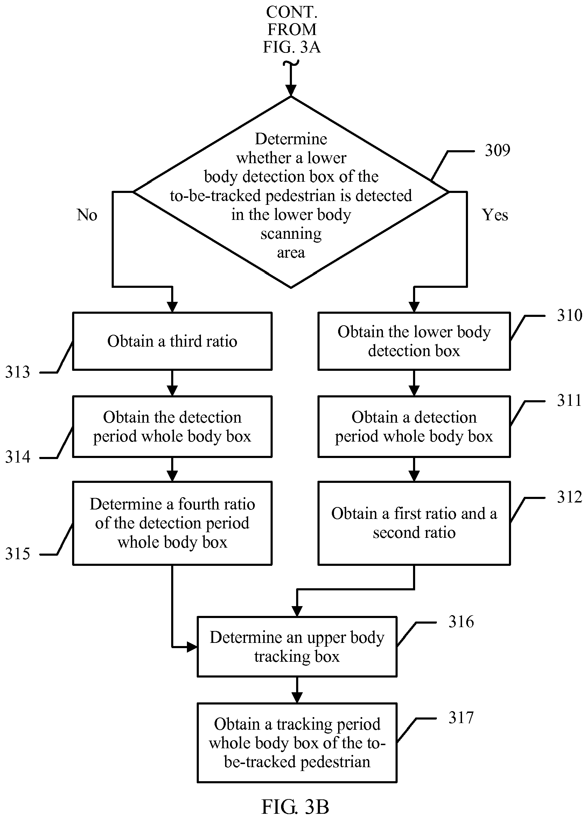

Based on the electronic device shown in FIG. 1 and FIG. 2, a specific execution procedure of the pedestrian tracking method shown in the embodiments is described below in detail with reference to FIG. 3A and FIG. 3B.

FIG. 3A and FIG. 3B are a flowchart of steps of an embodiment of a pedestrian tracking method according to the present invention.

It should be first noted that an execution body of the pedestrian tracking method shown in this embodiment is the electronic device, and may be specifically one or more modules of the processor 122, for example, the object extraction module 211.

The pedestrian tracking method shown in this embodiment includes the following steps.

Step 301: Obtain a to-be-tracked video.

Specifically, the object extraction module 211 included in the processor 122 shown in this embodiment is configured to obtain the to-be-tracked video.

Optionally, if the electronic device shown in this embodiment includes no camera, for example, the electronic device is a server, the electronic device shown in this embodiment communicates with a plurality of cameras by using the input/output interface 158. The camera is configured to shoot a to-be-tracked pedestrian to generate a to-be-tracked video. Correspondingly, the electronic device receives, by using the input/output interface 158, the to-be-tracked video sent by the camera, and further, the object extraction module 211 of the processor 122 obtains the to-be-tracked video received by the input/output interface 158.

Optionally, if the electronic device shown in this embodiment includes a camera, for example, the electronic device is a video camera, the object extraction module 211 of the processor 122 of the electronic device obtains the to-be-tracked video shot by the camera of the electronic device.

In specific application, the to-be-tracked video shown in this embodiment is usually massive videos.

It should be noted that the manner of obtaining the to-be-tracked video in this embodiment is an optional example, and does not constitute a limitation, provided that the object extraction module 211 can obtain the to-be-tracked video used for pedestrian tracking.

Step 302: Obtain a target image frame sequence.

Specifically, the object extraction module 211 shown in this embodiment obtains the target image frame sequence.

More specifically, after obtaining the to-be-tracked video, the object extraction module 211 shown in this embodiment determines the target image frame sequence in the to-be-tracked video.

The target image frame sequence is the first M image frames of the to-be-tracked video, and a specific value of M is not limited in this embodiment, provided that M is a positive integer greater than 1.

The target image frame sequence includes one or more consecutive image frames.

Step 303: Obtain a background area of the to-be-tracked video.

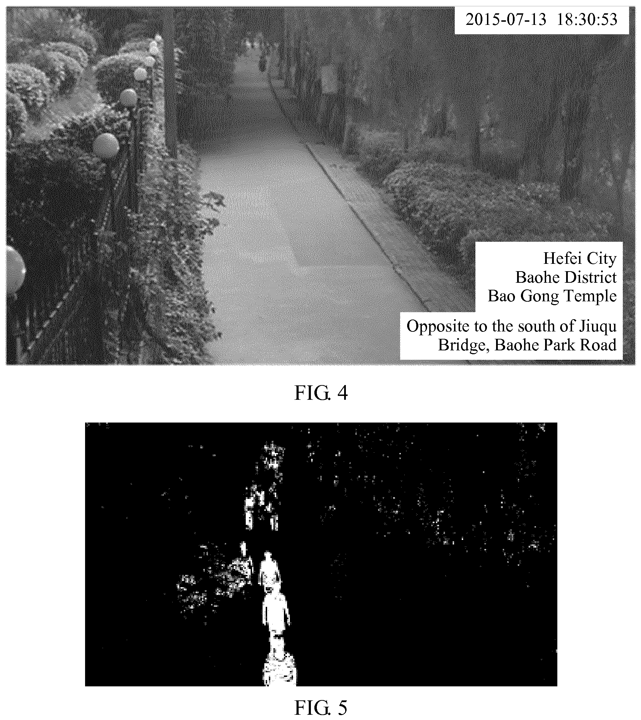

Specifically, the object extraction module 211 shown in this embodiment learns the target image frame sequence of the to-be-tracked video, to obtain the background area of the to-be-tracked video. For the background area of the to-be-tracked video shown in this embodiment, refer to FIG. 4.

Optionally, the object extraction module 211 may specifically obtain the background area of the to-be-tracked video in the following manner: The object extraction module 211 obtains a still object from any image frame of the target image frame sequence by using a static background model, and determines the still object as the background area of the to-be-tracked video.

It should be noted that the description of obtaining the background area of the to-be-tracked video in this embodiment is an optional example, and does not constitute a limitation. For example, the object extraction module 211 may alternatively use a frame difference method, an optical flow field method, or the like, provided that the object extraction module 211 can obtain the background area.

It should be further noted that step 303 shown in this embodiment is an optional step.

Step 304: Determine a detection period and a tracking period of the to-be-tracked video.

Specifically, the object extraction module 211 determines the detection period T1 and the tracking period T2.

Optionally, the detection period T1 shown in this embodiment is included in the tracking period T2, and duration of the detection period T1 is less than duration of the tracking period T2.

For example, the duration of the tracking period T2 may be 10 minutes, the duration of the detection period T1 is 2 seconds, and the first two seconds within 10 minutes of the duration of the tracking period T2 are the detection period T1.

Optionally, the detection period T1 shown in this embodiment may not be included in the tracking period T2, the detection period T1 is before the tracking period T2, and duration of the detection period T1 is less than duration of the tracking period T2.

For example, the duration of the detection period T1 is 2 seconds, the duration of the tracking period T2 may be 10 minutes, and the tracking period T2 is further executed after the detection period T1.

It should be noted that the descriptions of the duration of the detection period T1 and the duration of the tracking period T2 in this embodiment are optional examples, and do not constitute a limitation.

In this embodiment, an example in which the detection period T1 is included in the tracking period T2 is used for description.

More specifically, a start frame of the detection period T1 shown in this embodiment is a t$^{th}$ frame of the to-be-tracked video, and t is greater than M. It can be learned that the target image frame sequence in this embodiment is before the detection period T1.

Step 305: Obtain a foreground area of any image frame of the to-be-tracked video.

Specifically, the object extraction module 211 shown in this embodiment obtains the foreground area of the image frame of the to-be-tracked video by subtracting the background area from the image frame of the to-be-tracked video within the detection period.

FIG. 5 shows the obtained foreground area of the image frame of the to-be-tracked video shown in this embodiment. FIG. 5 shows the foreground area of the image frame of the to-be-tracked video. Specifically, white pixels shown in FIG. 5 are the foreground area of the image frame of the to-be-tracked video.

Specifically, when obtaining the background area of the to-be-tracked video, the object extraction module 211 shown in this embodiment obtains a difference between any area of the image frame of the to-be-tracked video and the background area, to obtain a target value. It can be learned that different areas of the image frame of the to-be-tracked video are each corresponding to one target value.

If the target value is greater than or equal to a preset threshold, it indicates that an area that is of the image frame of the to-be-tracked video and that is corresponding to the target value is a motion area.

The preset threshold shown in this embodiment is set in advance, and a value of the preset threshold is not limited in this embodiment, provided that a motion area of the image frame of the to-be-tracked video can be determined based on the preset threshold.

When the motion area is detected, the motion area is determined as the foreground area of the image frame of the to-be-tracked video.

Step 306: Obtain a to-be-tracked pedestrian.

The object extraction module 211 shown in this embodiment obtains the to-be-tracked pedestrian by detecting the foreground area of the image frame of the to-be-tracked video.

A specific quantity of to-be-tracked pedestrians detected by the object extraction module 211 is not limited in this embodiment.

Step 307: Obtain an upper body detection box of the to-be-tracked pedestrian.

To obtain the upper body detection box of the to-be-tracked pedestrian shown in this embodiment, the object extraction module 211 shown in this embodiment first determines a target image frame.

Specifically, the target image frame shown in this embodiment is an image frame in which the to-be-tracked pedestrian appears.

Optionally, if the to-be-tracked pedestrian shown in this embodiment is a pedestrian appearing in any image frame within the detection period T1 of the to-be-tracked video, the object extraction module 211 may determine that an image frame in which the to-be-tracked pedestrian appears is the target image frame, in other words, the target image frame is an image frame in which the to-be-tracked pedestrian appears within the detection period of the to-be-tracked video.

Optionally, if the to-be-tracked pedestrian shown in this embodiment is a pedestrian appearing in consecutive image frames within the detection period T1 of the to-be-tracked video, the object extraction module 211 may determine that a last image frame in which the to-be-tracked pedestrian appears and that is in the consecutive image frames of the to-be-tracked video in which the to-be-tracked pedestrian continuously appears is the target image frame, or the object extraction module 211 may determine that a random image frame in which the to-be-tracked pedestrian appears and that is in the consecutive image frames of the to-be-tracked video in which the to-be-tracked pedestrian continuously appears is the target image frame. This is not specifically limited in this embodiment.

Optionally, if the to-be-tracked pedestrian shown in this embodiment is a pedestrian appearing in image frames within the detection period T1 of the to-be-tracked video at intervals, the object extraction module 211 may determine that a last image frame in which the to-be-tracked pedestrian appears and that is in the image frames of the to-be-tracked video in which the to-be-tracked pedestrian appears at intervals is the target image frame, or the object extraction module 211 may determine that a random image frame in which the to-be-tracked pedestrian appears and that is in the image frames of the to-be-tracked video in which the to-be-tracked pedestrian appears at intervals is the target image frame.

This is not specifically limited in this embodiment.

It should be noted that the foregoing description of how to determine the target image frame is an optional example, and does not constitute a limitation, provided that the to-be-tracked pedestrian appears in the target image frame.

When determining the target image frame, the object extraction module 211 may obtain the upper body detection box in the target image frame.

A first detector may be disposed on the object extraction module 211 shown in this embodiment, and the first detector is configured to detect the upper body detection box.

Specifically, the first detector of the object extraction module 211 obtains the upper body detection box in a foreground area of the target image frame.

The object extraction module 211 shown in this embodiment can detect the to-be-tracked pedestrian in the foreground area of the target image frame, in other words, in a process of detecting the to-be-tracked pedestrian, the object extraction module 211 does not need to detect the background area, so as to greatly reduce a time required for pedestrian detection while pedestrian detection accuracy is improved.

The following describes how the object extraction module 211 obtains the upper body detection box of the to-be-tracked pedestrian in the foreground area of the target image frame.

Specifically, the object extraction module 211 shown in this embodiment obtains, within the detection period, the upper body detection box of the to-be-tracked pedestrian appearing in the to-be-tracked video.

Specifically, the upper body detection box shown in this embodiment is

$$\mathrm{RECT_u^d = [L_u^d, T_u^d, R_u^d, B_u^d]}$$

$L_u^d$ is an upper-left horizontal coordinate of the upper body detection box, $T_u^d$ is an upper-left vertical coordinate of the upper body detection box, $R_u^d$ is a lower-right horizontal coordinate of the upper body detection box, and $B_u^d$ is a lower-right vertical coordinate of the upper body detection box.

When detecting the to-be-tracked pedestrian, the object extraction module 211 shown in this embodiment may obtain $L_u^d$, $T_u^d$, $R_u^d$, and $B_u^d$.

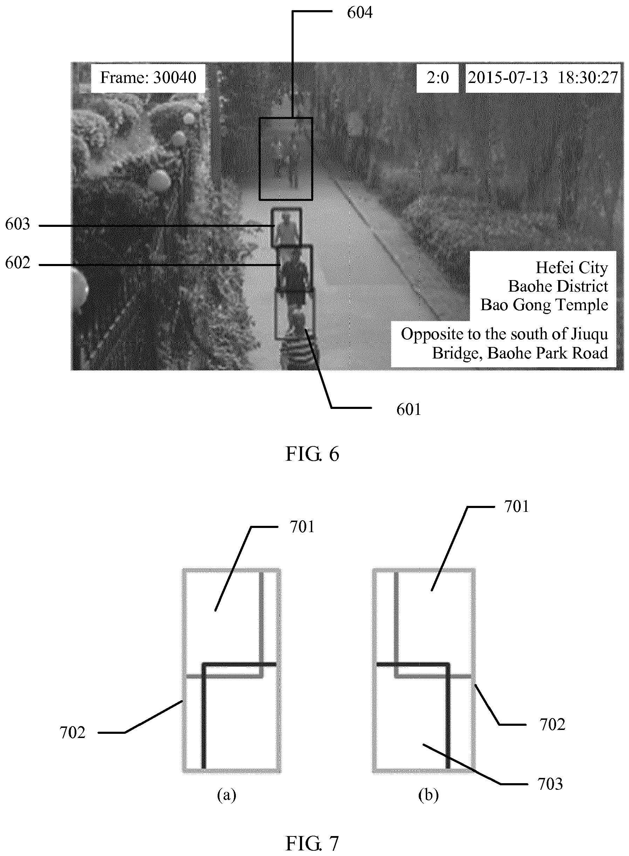

An example in which the target image frame determined by the object extraction module 211 is shown in FIG. 6 is used. By using the foregoing method shown in this embodiment, to-be-tracked pedestrians appearing in the target image frame can be detected, to obtain an upper body detection box of each to-be-tracked pedestrian.

In a detection process shown in FIG. 6, because a pedestrian 601 in the target image frame appears on an edge of the target image frame, and the whole body of the pedestrian 601 is not completely displayed, the object extraction module 211 shown in this embodiment cannot obtain an upper body detection box of the pedestrian 601.

If both the whole body of a pedestrian 602 and the whole body of a pedestrian 603 in the target image frame clearly appear in the target image frame, the object extraction module 211 may obtain an upper body detection box of the pedestrian 602 and an upper body detection box of the pedestrian 603.

If each pedestrian in an area 604 in the target image frame is not clearly displayed, the object extraction module 211 shown in this embodiment cannot obtain an upper body detection box of each pedestrian in the area 604.

It can be learned that the object extraction module 211 shown in this embodiment detects only an upper body detection box of a to-be-tracked pedestrian displayed in the target image frame.

Specifically, the to-be-tracked pedestrian is a pedestrian completely displayed in the target image frame, in other words, both the upper body and the lower body of the to-be-tracked pedestrian are completely displayed in the target image frame.

More specifically, the to-be-tracked pedestrian is a pedestrian whose area displayed in the target image frame is greater than or equal to a preset threshold of the object extraction module 211, in other words, if the to-be-tracked pedestrian whose area displayed in the target image frame is greater than or equal to the preset threshold, it indicates that the to-be-tracked pedestrian is clearly displayed in the target image frame. When the to-be-tracked pedestrian in the target image frame is less than the preset threshold, the object extraction module 211 cannot detect the to-be-tracked pedestrian.

Step 308: Obtain a lower body scanning area based on the upper body detection box.

In this embodiment, after the object extraction module 211 obtains the upper body detection box of the to-be-tracked pedestrian, the object extraction module 211 may obtain the lower body scanning area of the to-be-tracked pedestrian based on the upper body detection box of the to-be-tracked pedestrian.

To obtain the lower body scanning area of the to-be-tracked pedestrian, the object extraction module 211 needs to obtain a first parameter, a second parameter, and a third parameter.

The first parameter is $B_f^{estimate} = B_u^d - (B_u^d - T_u^d) * (1 - \frac{1}{Ratio_{default}})$, where $Ratio_{default}$ is a preset ratio.

Optionally, $Ratio_{default}$ in this embodiment is pre-stored by the object extraction module 211 in the memory medium 130, and $Ratio_{default}$ may be preset by the object extraction module 211 based on an aspect ratio of a human body detection box (as shown in BACKGROUND). For example, if it is pre-determined that the aspect ratio of the human body detection box is 3:7, the object extraction module 211 may set $Ratio_{default}$ to 3/7, and store $Ratio_{default}$ in the memory medium 130, so that in a process of performing this step, the object extraction module 211 can extract $Ratio_{default}$ from the memory medium 130 to calculate the first parameter $B_f^{estimate}$.

The second parameter is $W_u^d = R_u^d - L_u^d$, and the third parameter is $H_f^{estimate}$ =the first parameter $B_f^{estimate} - T_u^d$.

When the object extraction module 211 obtains the first parameter, the second parameter, and the third parameter, the object extraction module 211 may determine the lower body scanning area.

The lower body scanning area is ScanArea = [$L^E$, $T^E$, $R^E$, $B^E$], where $L^E$ is an upper-left horizontal coordinate of the lower body scanning area, $T^E$ is an upper-left vertical coordinate of the lower body scanning area, $R^E$ is a lower-right horizontal coordinate of the lower body scanning area, and $B^E$ is a lower-right vertical coordinate of the lower body scanning area.

Specifically, $L^s = \max \{ 1, \ L_u^d - W_u^d/paral1 \}$,

$$T^s = \max \{ 1, \ T_u^d + H_f^{estimate}/paral2 \},$$

$$R^s = \min \{ imgW - 1, \ R_u^d + W_u^d/paral2 \},$$

and

$$B^s = \min \{ imgH - 1, \ B_f^{estimate} + H_f^{estimate} W_u^d/paral3 \}.$$

More specifically, paral1, paral2, and paral3 are preset values.

Specific values of paral1, paral2, and paral3 are not limited in this embodiment, and paral1, paral2, and paral3 may be empirical values, or operating staff may implement different settings of the lower body scanning area through different settings of paral1, paral2, and paral3.

imgW is a width of any image frame of the to-be-tracked video within the detection period, and imgH is a height of any image frame of the to-be-tracked video within the detection period.

Step 309: Determine whether a lower body detection box of the to-be-tracked pedestrian is detected in the lower body scanning area, and if the lower body detection box of the to-be-tracked pedestrian is detected in the lower body scanning area, perform step 310, or if the lower body detection box of the to-be-tracked pedestrian is not detected in the lower body scanning area, perform step 313.

Specifically, the object extraction module 211 shown in this embodiment performs lower body detection in the lower body scanning area, to determine whether the lower body detection box of the to-be-tracked pedestrian can be detected.

Step 310: Obtain the lower body detection box.

Specifically, a lower body detector may be disposed on the object extraction module 211.

More specifically, when performing lower body detection in the lower body scanning area, to determine that the lower body detection box of the to-be-tracked pedestrian can be obtained, the lower body detector of the object extraction module 211 shown in this embodiment determines that the lower body detection box is $RECT_I^d = [L_I^d, T_I^d, R_I^d, B_I^d]$, where $L_I^d$ is an upper-left horizontal coordinate of the lower body detection box, $T_I^d$

is an upper-left vertical coordinate of the lower body detection box, $R_l^d$ is a lower-right horizontal coordinate of the lower body detection box, and $B_l^d$ is a lower-right vertical coordinate of the lower body detection box.

Step 311: Obtain a detection period whole body box.

Specifically, the object extraction module 211 obtains the detection period whole body box based on the upper body detection box and the lower body detection box.

More specifically, the object extraction module 211 shown in this embodiment combines the upper body detection box and the lower body detection box, to obtain the detection period whole body box.

The detection period whole body box is $RECT_f^d = [L_f^d, T_f^d, R_f^d, B_f^d]$.

An upper-left horizontal coordinate of the detection period whole body box is $L_f^d = \min(L_u^d, L_l^d)$, an upper-left vertical coordinate of the detection period whole body box is $T_f^d = T_u^d$, a lower-right horizontal coordinate of the detection period whole body box is $R_f^d = \max(R_u^d, R_l^d)$, and a lower-right vertical coordinate of the detection period whole body box is $B_f^d = B_l^d$.

Step 312: Obtain a first ratio and a second ratio.

Specifically, after obtaining the detection period whole body box, the object extraction module 211 shown in this embodiment may determine the first ratio of the detection period whole body box.

The first ratio is a ratio of a width of the detection period whole body box to a height of the detection period whole body box, and the first ratio is

$$Ratio_{wh}^d = \frac{R_f^d - L_f^d}{B_f^d - T_f^d}.$$

The object extraction module 211 shown in this embodiment determines the second ratio of the detection period whole body box.

Specifically, the second ratio is a ratio of a height of the upper body detection box to the height of the detection period whole body box, and the second ratio is $Ratio_{hh}^d = \frac{B_u^d - T_u^d}{B_f^d - T_f^d}$.

Step 313: Obtain a third ratio.

In this embodiment, if the object extraction module 211 does not obtain the lower body detection box by performing lower body detection in the lower body scanning area, the object extraction module 211 obtains the third ratio. The third ratio is a preset ratio $Ratio_{wh}^d$ of a width of the detection period whole body box to a height of the detection period whole body box.

Step 314: Obtain the detection period whole body box.

In this embodiment, when the object extraction module 211 does not obtain the lower body detection box by performing lower body detection in the lower body scanning area, the object extraction module 211 obtains the detection period whole body box $RECT_f^d = [L_f^d, T_f^d, R_f^d, B_f^d]$.

An upper-left horizontal coordinate of the detection period whole body box is $L_f^d = L_u^d$, an upper-left vertical coordinate of the detection period whole body box is $T_f^d = T_u^d$, a lower-right horizontal coordinate of the detection period whole body box is $R_f^d = R_u^d$, and a lower-right vertical coordinate of the detection period whole body box is

$$B_f^d = (R_u^d - L_u^d) * Ratio_{default} + T_u^d.$$

Step 315: Determine a fourth ratio of the detection period whole body box.

The object extraction module 211 shown in this embodiment determines that the fourth ratio is a ratio of a height of the upper body detection box to the height of the detection period whole body box.

The fourth ratio is $\text{Ratio}_{hh}^d = \frac{B_u^d - T_u^d}{B_f^d - T_f^d}$.

After step 312 or step 315 is performed, step 316 shown in this embodiment continues to be performed.

Step 316: Determine an upper body tracking box.

In this embodiment, the object extraction module 211 initializes the detection period whole body box obtained within the detection period T1 as a tracking target, so that the object extraction module 211 can track, within the tracking period T2, the to-be-tracked pedestrian serving as the tracking target.

It should be noted that in this embodiment, there may be at least one to-be-tracked pedestrian determined in the foregoing step. If there are a plurality of to-be-tracked pedestrians, each of the plurality of to-be-tracked pedestrians needs to be used as the tracking target for tracking.

For example, if the to-be-tracked pedestrians determined in the foregoing step are a pedestrian A, a pedestrian B, a pedestrian C, and a pedestrian D, the pedestrian A needs to be set as the tracking target to perform subsequent steps for tracking, and the pedestrian B needs to be set as the tracking target to perform subsequent steps for tracking, in other words, each to-be-tracked pedestrian in the to-be-tracked video needs to be set as the tracking target to perform subsequent steps for tracking.

When tracking the to-be-tracked pedestrian, the object extraction module 211 first determines the upper body detection box. The object extraction module 211 separately performs normal division sampling by using the upper body detection box as a center, in other words, scatters a plurality of particles around the upper body detection box, and determines the upper body tracking box in the plurality of particles.

For better understanding, the following provides a description with reference to an application scenario.

If the object extraction module 211 determines the upper body detection box in an N1 frame within the detection period T1 of the to-be-tracked video, the object extraction module 211 tracks the to-be-tracked pedestrian in an N2 frame within the tracking period T2 of the to-be-tracked video. The N2 frame is any frame within the tracking period T2 of the to-be-tracked video.

The to-be-tracked pedestrian is in motion in the to-be-tracked video, and a location of the to-be-tracked pedestrian in the N1 frame is different from a location of the to-be-tracked pedestrian in the N2 frame. Therefore, in order that the object extraction module 211 tracks the to-be-tracked pedestrian, the object extraction module 211 needs to scatter a plurality of particles around the upper body detection box of the to-be-tracked pedestrian, to track the to-be-tracked pedestrian.

Specifically, a fifth ratio of any one of the plurality of particles is the same as a sixth ratio of the upper body detection box, the fifth ratio is a ratio of a width to a height of any one of the plurality of particles, and the sixth ratio is a ratio of a width of the upper body detection box to a height of the upper body detection box.

It can be learned that by using the method shown in this embodiment, any particle scattered by the object extraction module 211 around the upper body detection box is a rectangular box having a same ratio of a width to a height as the upper body detection box.

The object extraction module 211 determines the upper body tracking box in the plurality of particles.

Specifically, the object extraction module 211 determines that a particle most similar to the upper body detection box among the plurality of particles is the upper body tracking box.

The upper body tracking box is $\text{RECT}_u^t = [L_u^t, T_u^t, R_u^t, B_u^t]$, where $L_u^t$ is an upper-left horizontal coordinate of the upper body tracking box, $T_u^t$ is an upper-left vertical coordinate of the upper body tracking box, $R_u^t$ is a lower-right horizontal coordinate of the upper body tracking box, and $B_u^t$ is a lower-right vertical coordinate of the upper body tracking box.

Step 317: Obtain a tracking period whole body box of the to-be-tracked pedestrian.

In this embodiment, the object extraction module 211 obtains, based on the detection period whole body box, the tracking period whole body box corresponding to the upper body tracking box.

The tracking period whole body box is used to track the to-be-tracked pedestrian.

The following describes in detail how the object extraction module 211 specifically obtains the tracking period whole body box.

After the object extraction module 211 obtains the detection period whole body box and the upper body tracking box, as shown in FIG. 7, the object extraction module 211 determines whether an upper-left horizontal coordinate $L_u^d$ of the upper body detection box 701 is equal to an upper-left horizontal coordinate $L_f^d$ of the detection period whole body box 702.

As shown in (a) in FIG. 7, if the object extraction module 211 determines that $L_f^d = L_u^d$, the object extraction module 211 determines that an upper-left horizontal coordinate of the tracking period whole body box is $L_f^t = L_u^t$; the object extraction module 211 determines that an upper-left vertical coordinate of the tracking period whole body box is $T_f^t = T_u^t$; the object extraction module 211 determines that a lower-right horizontal coordinate of the tracking period whole body box is $R_f^t = L_f^t + W_f^t$, and the object extraction module 211 determines that a lower-right vertical coordinate of the tracking period whole body box is $B_f^t = \frac{B_u^t - T_u^t}{Ratio_{hh}^d} + T_f^t$, where

$$W_f^t = (B_f^t - T_f^t) * Ratio_{wh}^d.$$

For a specific description of $Ratio_{wh}^d$, refer to the foregoing step. Details are not described in this step.

The object extraction module 211 shown in this embodiment may determine that the tracking period whole body box is $RECT_f^t = [L_f^t, T_f^t, R_f^t, B_f^t]$.

After the object extraction module 211 obtains the detection period whole body box and the upper body tracking box, as shown in FIG. 7, the object extraction module 211 determines whether the upper-left horizontal coordinate $L_f^d$ of the detection period whole body box 702 is equal to an upper-left horizontal coordinate $L_l^d$ of the lower body detection box 703.

As shown in (b) in FIG. 7, if the upper-left horizontal coordinate $L_f^d$ of the detection period whole body box 702 is equal to the upper-left horizontal coordinate $L_l^d$ of the lower body detection box 703, the object extraction module 211 determines that the upper-left horizontal coordinate of the tracking period whole body box is $L_f^t = L_u^t$; the object extraction module 211 determines that the upper-left vertical coordinate of the tracking period whole body box is $T_f^t = T_u^t$; the object extraction module 211 determines that the lower-right horizontal coordinate of the tracking period whole body box is $R_f^t = R_u^t$; the object extraction module 211 determines that the lower-right vertical coordinate of the tracking period whole body box is $B_f^t = \frac{B_u^t - T_u^t}{Ratio_{hh}^d} + T_f^t$, where $W_f^t = (B_f^t - T_f^t) * Ratio_{wh}^d$; and the object extraction module 211 determines that the tracking period whole body box is $RECT_f^t = [L_f^t, \ T_f^t, R_f^t, B_f^t]$.

For specific descriptions of $Ratio_{wh}^d$ and $Ratio_{hh}^d$, refer to the foregoing step. Details are not described in this step.

By using the method shown in this embodiment, the to-be-tracked pedestrian can be tracked in the to-be-tracked video within the tracking period T by using the tracking period whole body box.

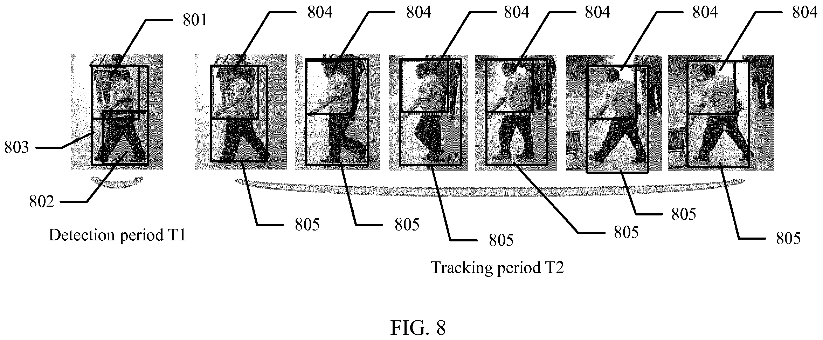

To better understand the method shown in this embodiment of the present invention, beneficial effects of the pedestrian tracking method shown in this embodiment are described below in detail with reference to an application scenario shown in FIG. 8.

The object extraction module 211 shown in this embodiment obtains, within the detection period T1, an upper body detection box 801 of the to-be-tracked pedestrian that is shown in FIG. 8. For a specific process of obtaining the upper body detection box 801, refer to the foregoing step. Details are not described in this application scenario.

The object extraction module 211 obtains, within the detection period T1, a lower body detection box 802 of the to-be-tracked pedestrian that is shown in FIG. 8. For a specific process of obtaining the lower body detection box 802, refer to the foregoing embodiment. Details are not described in this embodiment.

The object extraction module 211 obtains, within the detection period T1, a detection period whole body box 803 shown in FIG. 8. For a specific process of obtaining the detection period whole body box 803, refer to the foregoing embodiment. Details are not described in this embodiment.

After obtaining the detection period whole body box 803, the object extraction module 211 may obtain a ratio $\text{Ratio}_{wh}^{d}$ of a width of the detection period whole body box 803 to a height of the detection period whole body box 803, and a ratio $\text{Ratio}_{hh}^{d}$ of a height of the upper body detection box 801 to the height of the detection period whole body box 803.

By using the method shown in this embodiment, in a process of obtaining the detection period whole body box 803, the detection period whole body box 803 obtained by the object extraction module 211 is obtained by combining the upper body detection box 801 of the to-be-tracked pedestrian and the lower body detection box 802 of the to-be-tracked pedestrian. It can be learned that an aspect ratio of the detection period whole body box 803 obtained by the object extraction module 211 may change. Therefore, even if the to-be-tracked pedestrian appears in an abnormal posture within the detection period T1, for example, in a posture that the legs of the to-be-tracked pedestrian are wide open, and therefore a proportion of the upper body to the lower body of the to-be-tracked pedestrian changes, the object extraction module 211 can still obtain an accurate detection period whole body box 803 of the to-be-tracked pedestrian by combining the obtained upper body detection box and the obtained lower body detection box.

The object extraction module 211 can accurately capture a change of a posture of the to-be-tracked pedestrian based on the aspect ratio of the detection period whole body box 803 in this embodiment that may change, so that the detection period whole body box 803 can accurately capture the change of the posture of the to-be-tracked pedestrian. It can be learned that an accurate detection period whole body box 803 can still be obtained regardless of the change of the posture of the to-be-tracked pedestrian.

The object extraction module 211 may obtain an upper body tracking box 804 and a tracking period whole body box 805 within the detection period T2. For a specific obtaining process, refer to the foregoing step. Details are not described in this embodiment.

The object extraction module 211 shown in this embodiment can still use $\text{Ratio}_{wh}^{d}$ and $\text{Ratio}_{hh}^{d}$ within the tracking period T2, to obtain a more accurate tracking period whole body box 805 based on $\text{Ratio}_{wh}^{d}$ and $\text{Ratio}_{hh}^{d}$ that may change. In this way, even if a posture of the to-be-tracked pedestrian changes, the to-be-tracked pedestrian can still be accurately tracked within the tracking period T2.

In a specific process of tracking a pedestrian, step 304 shown in this embodiment to step 317 shown in this embodiment may be performed for a plurality of times, so as to more accurately track the to-be-tracked pedestrian. For example, after the object extraction module 211 executes the tracking period T2 once, the object extraction module 211 may repeatedly execute the tracking period T2 for a plurality of times within a subsequent time. A quantity of times of executing the tracking period T2 is not limited in this embodiment.

Because the object extraction module 211 shown in this embodiment may execute the tracking period T2 for a plurality of times, the object extraction module 211 may update specific values of $\text{Ratio}_{wh}^{d}$ and $\text{Ratio}_{hh}^{d}$ for a plurality of times based on a detection result, so as to obtain a more accurate tracking period whole body box within the tracking period T2, thereby accurately tracking the pedestrian.

By using the method shown in this embodiment, the to-be-tracked pedestrian may be detected and tracked in the foreground area of the image frame of the to-be-tracked video, in other words, both a detection process and a tracking process of the to-be-tracked pedestrian that are shown in this embodiment are executed in the foreground area of the image. Therefore, a quantity of image windows that need to be processed is greatly reduced, in other words, search space for searching for the to-be-tracked pedestrian by the electronic device is reduced, so as to reduce duration required for tracking the to-be-tracked pedestrian, and improve efficiency of tracking the to-be-tracked pedestrian by the electronic device.

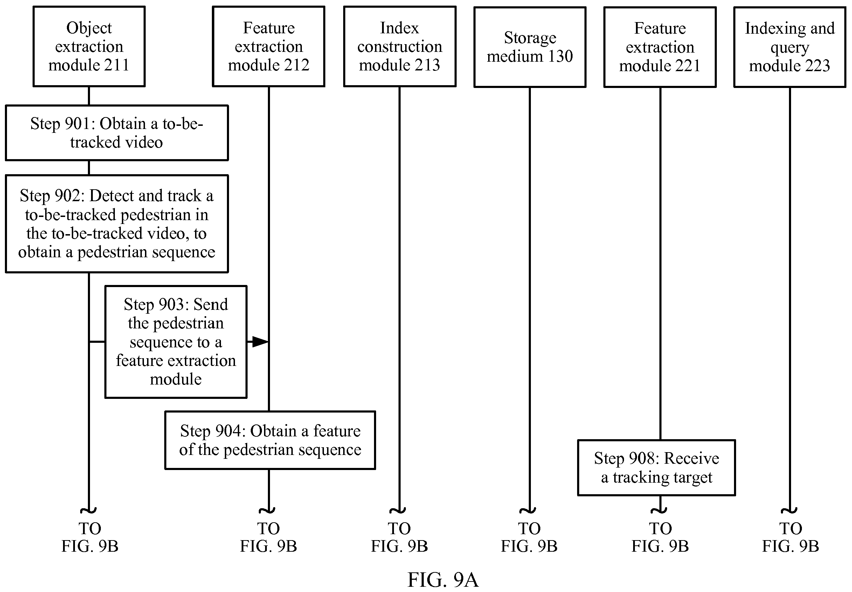

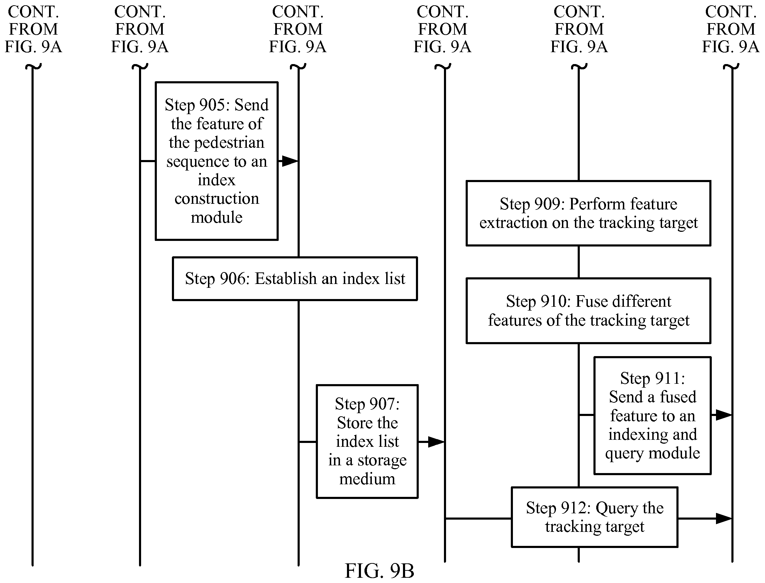

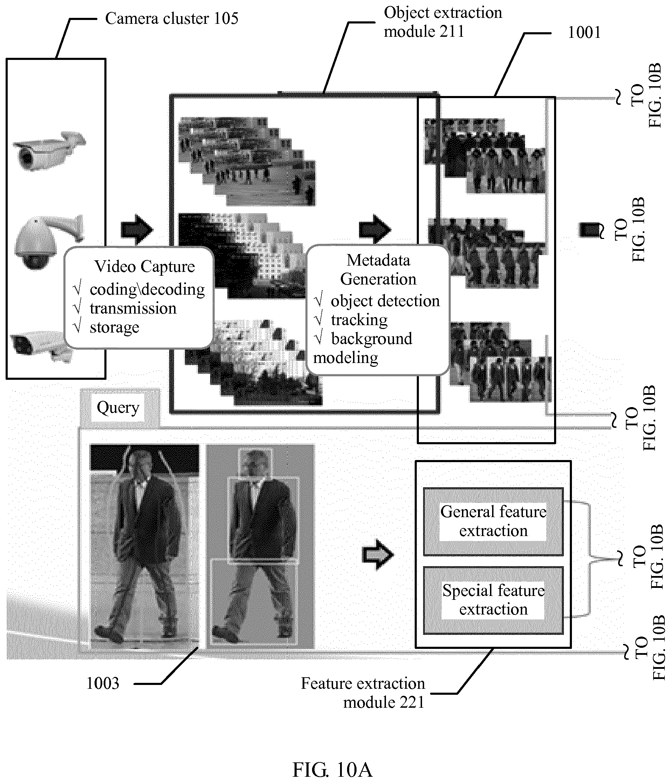

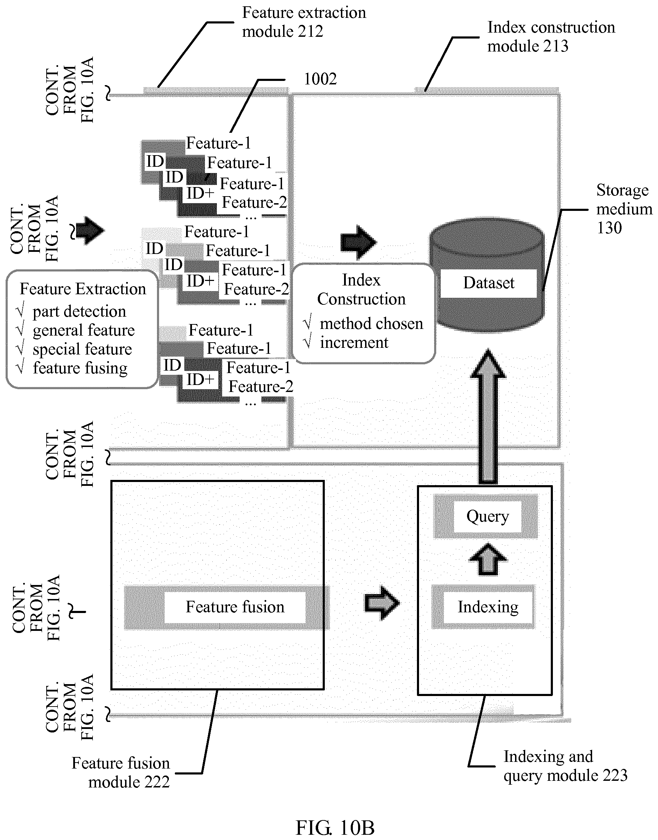

Based on the electronic device shown in FIG. 1 and FIG. 2, the following describes in detail a pedestrian query method according to an embodiment with reference to FIG. 9A and FIG. 9B and FIG. 10.

FIG. 9A and FIG. 9B are a flowchart of steps of an embodiment of a pedestrian query method according to the present invention. FIG. 10 is a schematic diagram of execution steps of an embodiment of a pedestrian tracking method according to the present invention.

It should be first noted that a description of each execution body of the pedestrian query method shown in this embodiment is an optional example, and does not constitute a limitation, in other words, the execution body of each step shown in this embodiment may be any module of the processor 122 shown in FIG. 2, or the execution body of each step shown in this embodiment may be a module that is not shown in FIG. 2. This is not specifically limited in this embodiment, provided that the electronic device can perform the pedestrian query method shown in this embodiment.

Sep 901: Obtain a to-be-tracked video.

For a specific execution process of step 901 shown in this embodiment, refer to step 301 shown in FIG. 3A and FIG. 3B. The specific execution process is not described in this embodiment.

Step 902: Detect and track a to-be-tracked pedestrian in the to-be-tracked video, to obtain a pedestrian sequence.

The object extraction module 211 shown in this embodiment is configured to detect and track the to-be-tracked pedestrian in the to-be-tracked video. For a specific execution process, refer to step 302 to step 317 shown in the foregoing embodiment. Details are not described in this embodiment.

Specifically, if the object extraction module 211 shown in this embodiment obtains a plurality of to-be-tracked pedestrians in the foregoing step, the object extraction module 211 obtains the pedestrian sequence through summarizing in the foregoing step.

The pedestrian sequence obtained by the object extraction module 211 includes a plurality of sub-sequences, any one of the plurality of sub-sequences is a target sub-sequence, the target sub-sequence is corresponding to a target to-be-tracked pedestrian, and the target to-be-tracked pedestrian is corresponding to one of the plurality of to-be-tracked pedestrians determined in the foregoing step.

The target sub-sequence shown in this embodiment includes a plurality of image frames, and any one of the plurality of image frames includes the target to-be-tracked pedestrian.

Any image frame included in the target sub-sequence has the tracking period whole body box that is corresponding to the target to-be-tracked pedestrian and that is shown in the foregoing step.

It can be learned that the pedestrian sequence shown in this embodiment includes the plurality of sub-sequences, any one of the plurality of sub-sequences includes the plurality of image frames, and an image frame included in any sub-sequence displays a tracking period whole body box that is of the to-be-tracked pedestrian and that is corresponding to the sub-sequence.

As shown in FIG. 10, an example in which the electronic device includes no camera is used for description in this embodiment. The electronic device shown in this embodiment can communicate with a camera cluster 105. The camera cluster 105 includes a plurality of cameras, and each camera can shoot a to-be-tracked pedestrian to generate a to-be-tracked video, so that the electronic device can receive the to-be-tracked video sent by the camera.

The object extraction module 211 may create different sub-sequences 1001 for different target to-be-tracked pedestrians, and the sub-sequence 1001 includes a plurality of image frames that are corresponding to the target to-be-tracked pedestrian and in which the target to-be-tracked pedestrian appears.

Step 903: Send the pedestrian sequence to a feature extraction module.

In this embodiment, the object extraction module 211 sends the pedestrian sequence to the feature extraction module 212.

Step 904: Obtain a feature of the pedestrian sequence.

The feature extraction module 212 shown in this embodiment uses the pedestrian sequence as an input to extract the feature of the pedestrian sequence.

Specifically, the feature extraction module 212 may analyze the pedestrian sequence, to check whether each pixel in any image frame included in the pedestrian sequence represents a feature, so as to extract the feature of the pedestrian sequence.

Specifically, the feature of the pedestrian sequence is a set of features of all target to-be-tracked pedestrians included in the pedestrian sequence.

For example, if the pedestrian sequence includes five to-be-tracked pedestrians: A, B, C, D, and E, the feature extraction module 212 may perform feature extraction on an image frame of the pedestrian A to obtain a feature set of a target to-be-tracked pedestrian corresponding to the pedestrian A, and perform feature extraction on an image frame of the pedestrian B to obtain a feature set of a target to-be-tracked pedestrian corresponding to the pedestrian B, until feature extraction of all pedestrians in the pedestrian sequence is completed.

As shown in FIG. 10, the feature set 1002 created by the feature extraction module 212 includes a target identifier ID corresponding to a target to-be-tracked pedestrian and a plurality of image features corresponding to the target to-be-tracked pedestrian.

An example in which the target to-be-tracked pedestrian is a pedestrian A is used, and the feature set 1002 corresponding to the target to-be-tracked pedestrian A includes a target identifier ID corresponding to the target to-be-tracked pedestrian A and a plurality of image features corresponding to the target to-be-tracked pedestrian A.

It can be learned that the feature extraction module 212 shown in this embodiment can create a correspondence between each of different target to-be-tracked pedestrians and each of different target identifier IDs and a correspondence between each of different target identifier IDs and each of a plurality of image features.

Step 905: Send the feature of the pedestrian sequence to an index construction module.

The feature extraction module 212 shown in this embodiment can send the obtained feature of the pedestrian sequence to the index construction module 213.

Step 906: Establish an index list.

After receiving the feature of the pedestrian sequence, the index construction module 213 shown in this embodiment establishes the index list. A correspondence included in the index list is the correspondence between each of different target to-be-tracked pedestrians and each of different target identifier IDs, and the correspondence between each of different target identifier IDs and each of a plurality of image features. In addition, the index construction module 213 shown in this embodiment can further create, by using the index list, different target identifier IDs and any information such as a time and a place at which corresponding target to-be-tracked pedestrians appear in the to-be-tracked video.

Step 907: Store the index list in a storage medium.

After creating the index list, the index construction module 213 shown in this embodiment stores the index list in the storage medium 130.

In step 901 to step 907 shown in this embodiment, different pedestrians can be classified in massive to-be-tracked videos, to facilitate subsequent tracking target query.

When a tracking target needs to be queried, the following steps may be performed.

Step 908: Receive a tracking target.

As shown in this embodiment, image-based image search can be implemented, in other words, an image in which the tracking target appears may be input into the feature extraction module 221 during query.

FIG. 10 is used as an example. To query the tracking target, an image 1003 in which the tracking target appears may be input into the feature extraction module 221.

Step 909: Perform feature extraction on the tracking target.

Specifically, the feature extraction module 221 shown in this embodiment can analyze an image in which the tracking target appears, to obtain a feature of the tracking target. By using the method shown in this embodiment, a plurality of features corresponding to the tracking target can be obtained.

Step 910: Fuse different features of the tracking target.

In this embodiment, the feature fusion module 222 can fuse the different features of the tracking target.

As shown in FIG. 10, the feature fusion module 222 can fuse the different features of the tracking target to obtain a fused feature. It can be learned that the fused feature shown in this embodiment is corresponding to the tracking target.

Step 911: Send the fused feature to the indexing and query module.

Step 912: Query the tracking target.

The indexing and query module 223 shown in this embodiment queries the tracking target based on the fused feature corresponding to the tracking target.

Specifically, the indexing and query module 223 matches the fused feature and the index list stored in the storage medium 130, to find a target identifier ID corresponding to the fused feature, so that the indexing and query module 223 can obtain, based on the index list, any information such as a time and a place at which a pedestrian corresponding to the target identifier ID appears in the to-be-tracked video. In this embodiment, the pedestrian corresponding to the target identifier ID is the tracking target.

It can be learned that by using the method shown in this embodiment, only an image in which the tracking target appears needs to be received, to obtain information such as a time and a place at which the tracking target appears in massive videos.

For descriptions of beneficial effects achieved by detecting and tracking the to-be-tracked pedestrian in the method shown in this embodiment, refer to the foregoing embodiment. Details are not described in this embodiment.

By using the method shown in this embodiment, in a process of searching for a tracking target, the tracking target can be quickly and accurately located in massive to-be-tracked videos, so as to quickly obtain information such as a time and a place at which the tracking target appears in massive to-be-tracked videos.

An application scenario of the method shown in this embodiment is not limited. For example, the method may be applied to performing image-based image search in a safe city, so as to quickly obtain information related to a tracking target. The method may be further applied to mobilization trail generation and analysis, population statistics collection, and pedestrian warning in vehicle-assisted driving, and the like. Specifically, as long as a video that includes a pedestrian needs to be intelligently analyzed, pedestrian detection and tracking may be performed by using this embodiment of the present invention, so as to extract information such as a location and a trail of the pedestrian.

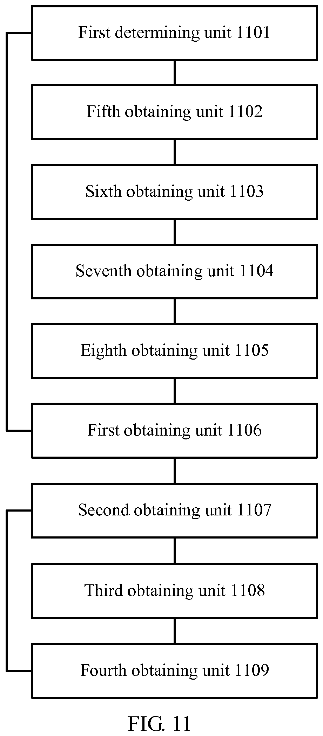

FIG. 1 describes a specific structure of the electronic device from a perspective of physical hardware. The following describes a structure of the electronic device with reference to FIG. 11 from a perspective of executing a procedure of the pedestrian tracking method shown in the foregoing embodiments, so that the electronic device shown in this embodiment can perform the pedestrian tracking method shown in the foregoing embodiments.

The electronic device includes a first determining unit 1101, a fifth obtaining unit 1102, a sixth obtaining unit 1103, a seventh obtaining unit 1104, an eighth obtaining unit 1105, a first obtaining unit 1106, a second obtaining unit 1107, a third obtaining unit 1108, and a fourth obtaining unit 1109.

The first determining unit 1101 is configured to determine a detection period and a tracking period of a to-be-tracked video.

The fifth obtaining unit 1102 is configured to obtain a target image frame sequence of the to-be-tracked video, where the target image frame sequence includes one or more consecutive image frames, and the target image frame sequence is before the detection period.

The sixth obtaining unit 1103 is configured to obtain a background area of the to-be-tracked video based on the target image frame sequence.

The seventh obtaining unit 1104 is configured to obtain a foreground area of any image frame of the to-be-tracked video by subtracting the background area from the image frame of the to-be-tracked video within the detection period.

The eighth obtaining unit 1105 is configured to obtain the to-be-tracked pedestrian by detecting the foreground area of the image frame of the to-be-tracked video.

Optionally, the fifth obtaining unit 1102 shown in this embodiment to the eighth obtaining unit 1105 shown in this embodiment are optional units. In specific application, the electronic device may not include the fifth obtaining unit 1102 shown in this embodiment to the eighth obtaining unit 1105 shown in this embodiment.

The first obtaining unit 1106 is configured to obtain, within the detection period, an upper body detection box of a to-be-tracked pedestrian appearing in the to-be-tracked video, where the upper body detection box is

$$\mathrm{RECT}_u^d = [\mathrm{L}_u^d, \mathrm{T}_u^d, \mathrm{R}_u^d, \mathrm{B}_u^d]$$, where $\mathrm{L}_u^d$ is an upper-left horizontal coordinate of the upper body detection box, $\mathrm{T}_u^d$ is an upper-left vertical coordinate of the upper body detection box, $\mathrm{R}_u^d$ is a lower-right horizontal coordinate of the upper body detection box, and $\mathrm{B}_u^d$ is a lower-right vertical coordinate of the upper body detection box.

Optionally, the first obtaining unit 1106 is specifically configured to: determine a target image frame, where the target image frame is an image frame in which the to-be-tracked pedestrian appears; and obtain the upper body detection box in a foreground area of the target image frame.

The second obtaining unit 1107 is configured to obtain a detection period whole body box of the to-be-tracked pedestrian based on the upper body detection box.

Optionally the second obtaining unit 1107 is specifically configured to: obtain a lower body scanning area based on the upper body detection box; and if a lower body detection box is obtained by performing lower body detection in the lower body scanning area, obtain the detection period whole body box based on the upper body detection box and the lower body detection box.

The upper body detection box is $\mathrm{RECT}_u^d = [\mathrm{L}_u^d, \mathrm{T}_u^d, \mathrm{R}_u^d, \mathrm{B}_u^d]$, where $\mathrm{L}_u^d$ is an upper-left horizontal coordinate of the upper body detection box, $\mathrm{T}_u^d$ is an upper-left vertical coordinate of the upper body detection box, $\mathrm{R}_u^d$ is a lower-right horizontal coordinate of the upper body detection box, and $\mathrm{B}_u^d$ is a lower-right vertical coordinate of the upper body detection box.

Optionally, when obtaining the lower body scanning area based on the upper body detection box, the second obtaining unit 1107 is specifically configured to: determine a first parameter, where the first parameter is

$$\mathrm{B}_f^{estimate} = \mathrm{B}_u^d - (\mathrm{B}_u^d - \mathrm{T}_u^d) * (1 - \frac{1}{\mathrm{Ratio}_{default}})$$, where $\mathrm{Ratio}_{default}$ is a preset ratio; determine a second parameter, where the second parameter is $\mathrm{W}_u^d = \mathrm{R}_u^d - \mathrm{L}_u^d$; determine a third parameter, where the third parameter

is $\mathrm{H}_f^{estimate} =$ the first parameter parameter $\mathrm{B}_f^{estimate} - \mathrm{T}_u^d$; and determine the lower body scanning area based on the first parameter, the second parameter, and the third parameter.

Optionally, when obtaining the lower body scanning area based on the upper body detection box, the second obtaining unit 1107 is specifically configured to determine the lower body scanning area based on the first parameter, the second parameter, and the third parameter, where the lower body scanning area is ScanArea = [L^E, T^E, R^E, B^E], L^E is an upper-left horizontal coordinate of the lower body scanning area, T^E is an upper-left vertical coordinate of the lower body scanning area, R^E is a lower-right horizontal coordinate of the lower body scanning area, and B^E is a lower-right vertical coordinate of the lower body scanning area, where

$$\mathrm{L}^s = \max\{1, \mathrm{L}_u^d - \mathrm{W}_u^d/\mathrm{paral1}\}$$,

$$\mathrm{T}^s = \max\{1, \mathrm{T}_u^d + \mathrm{H}_f^{estimate}/\mathrm{paral2}\}$$,

$$R^s = \min\left\{imgW - 1, \ R_u^d + W_u^d/paral2\right\}$$ ,

and

$$B^s = \min\left\{imgH - 1, \ B_f^{estimate} + H_f^{estimate}W_u^d/paral3\right\}$$ .

paral1, paral2, and paral3 are preset values, imgW is a width of any image frame of the to-be-tracked video within the detection period, and imgH is a height of any image frame of the to-be-tracked video within the detection period.

The lower body detection box is $RECT_l^d = [L_l^d, T_l^d, R_l^d, B_l^d]$, where $L_l^d$ is an upper-left horizontal coordinate of the lower body detection box, $T_l^d$ is an upper-left vertical coordinate of the lower body detection box, $R_l^d$ is a lower-right horizontal coordinate of the lower body detection box, and $B_l^d$ is a lower-right vertical coordinate of the lower body detection box.

Optionally, when obtaining the detection period whole body box of the to-be-tracked pedestrian based on the upper body detection box, the second obtaining unit 1107 is specifically configured to: determine an upper-left horizontal coordinate of the detection period whole body box, where the upper-left horizontal coordinate of the detection period whole body box is $L_f^d = \min(L_u^d, L_l^d)$, determine that an upper-left vertical coordinate of the detection period whole body box is $T_f^d = T_u^d$; determine that a lower-right horizontal coordinate of the detection period whole body box is $R_f^d = \max(R_u^d, R_l^d)$; determine that a lower-right vertical coordinate of the detection period whole body box is $B_f^d = B_l^d$; and determine that the detection period whole body box is $RECT_f^d = [L_f^d, T_f^d, R_f^d, B_f^d]$.

Optionally, when obtaining the detection period whole body box of the to-be-tracked pedestrian based on the upper body detection box, the second obtaining unit 1107 is specifically configured to: if the lower body detection box is not obtained by performing lower body detection in the lower body scanning area, determine an upper-left horizontal coordinate of the detection period whole body box, where the upper-left horizontal coordinate of the detection period whole body box is $L_f^d = L_u^d$; determine that an upper-left vertical coordinate of the detection period whole body box is $T_f^d = T_u^d$; determine that a lower-right horizontal coordinate of the detection period whole body box is $R_f^d = R_u^d$; determine that a lower-right vertical coordinate of the detection period whole body box is $B_f^d = (R_u^d - L_u^d) * Ratio_{default} + T_u^d$; and determine that the detection period whole body box is $RECT_f^d = [L_f^d, T_f^d, R_f^d, B_f^d]$.

The third obtaining unit 1108 is configured to obtain, within the tracking period, an upper body tracking box of the to-be-tracked pedestrian appearing in the to-be-tracked video.

Optionally, the third obtaining unit is specifically configured to: scatter a plurality of particles by using the upper body detection box as a center, where a ratio of a width to a height of any one of the plurality of particles is the same as a ratio of a width of the upper body detection box to the height of the upper body detection box; and determine the upper body tracking box, where the upper body tracking box is a particle most similar to the upper body detection box among the plurality of particles.

The fourth obtaining unit 1109 is configured to obtain, based on the detection period whole body box, a tracking period whole body box corresponding to the upper body tracking box, where the tracking period whole body box is used to track the to-be-tracked pedestrian.

Optionally, the fourth obtaining unit 1109 is specifically configured to: obtain a preset ratio $Ratio_{wh}^d$ of a width of the detection period whole body box to a height of the detection period whole body box; determine that a ratio of a height of the upper body detection box to the height of the detection period whole body box is $Ratio_{hh}^d = \frac{B_u^d - T_u^d}{B_f^d - T_f^d}$; and determine the tracking period whole body box based on $Ratio_{wh}^d$ and $Ratio_{hh}^d$.

Optionally, the fourth obtaining unit 1109 is specifically configured to: determine that a ratio of a width of the detection period whole body box to a height of the detection period whole body box is $\text{Ratio}_{wh}^{d} = \frac{R_f^d - L_f^d}{B_f^d - T_f^d}$; determine that a ratio of a height of the upper body detection box to the height of the detection period whole body box is $\text{Ratio}_{hh}^{d} = \frac{B_u^d - T_u^d}{B_f^d - T_f^d}$; and determine the tracking period whole body box based on $\text{Ratio}_{wh}^{d}$ and $\text{Ratio}_{hh}^{d}$.

The upper body tracking box is $\text{RECT}_u^t = \left[L_u^t, T_u^t, R_u^t, B_u^t\right]$, where $L_u^t$ is an upper-left horizontal coordinate of the upper body tracking box, $T_u^t$ is an upper-left vertical coordinate of the upper body tracking box, $R_u^t$ is a lower-right horizontal coordinate of the upper body tracking box, and $B_u^t$ is a lower-right vertical coordinate of the upper body tracking box.

Optionally, when determining the tracking period whole body box based on $\text{Ratio}_{wh}^{d}$ and $\text{Ratio}_{hh}^{d}$, the fourth obtaining unit 1109 is specifically configured to: determine an upper-left horizontal coordinate of the tracking period whole body box, where if $L_f^d = L_u^d$, the upper-left horizontal coordinate of the tracking period whole body box is $:L_f^t = L_u^t$; determine that an upper-left vertical coordinate of the tracking period whole body box is $T_f^t = T_u^t$; determine that a lower-right horizontal coordinate of the tracking period whole body box is $R_f^t = L_f^t + W_f^t$; determine that a lower-right vertical coordinate of the tracking period whole body box is $B_f^t = \frac{B_u^t - T_u^t}{\text{Ratio}_{hh}^d} + T_f^t$, where $W_f^t = (B_f^t - T_f^t) * \text{Ratio}_{wh}^{d}$; and determine that the tracking period whole body box is

$$\text{RECT}_f^t = [L_f^t, T_f^t, R_f^t, B_f^t].$$

Optionally, the fourth obtaining unit 1109 is specifically configured to: determine the upper-left horizontal coordinate of the tracking period whole body box, where if $L_f^d = L_l^d$, the upper-left horizontal coordinate of the tracking period whole body box is $L_f^t = R_f^t - W_f^t$; determine that the upper-left vertical coordinate of the tracking period whole body box is $T_f^t = T_u^t$; determine that the lower-right horizontal coordinate of the tracking period whole body box is $R_f^t = R_u^t$; determine that the lower-right vertical coordinate of the tracking period whole body box is $B_f^t = \frac{B_u^t - T_u^t}{\text{Ratio}_{hh}^d} + T_f^t$, where $W_f^t = (B_f^t - T_f^t) * \text{Ratio}_{wh}^{d}$; and determine that the tracking period whole body box is $\text{RECT}_f^t = [L_f^t, \ T_f^t, R_f^t, B_f^t]$.

For a specific process of performing the pedestrian tracking method by the electronic device shown in this embodiment, refer to the foregoing embodiments. Details are not described in this embodiment.

For descriptions of beneficial effects achieved by performing the pedestrian tracking method by the electronic device shown in this embodiment, refer to the foregoing embodiments. Details are not described in this embodiment.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processor, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A pedestrian tracking method, comprising:

   determining a detection period and a tracking period of a to-be-tracked video;
   obtaining, within the detection period, an upper body detection box of a to-be-tracked pedestrian appearing in the to-be-tracked video;
   obtaining a detection period whole body box of the to-be-tracked pedestrian based on the upper body detection box;
   obtaining, within the tracking period, an upper body tracking box of the to-be-tracked pedestrian appearing in the to-be-tracked video; and
   obtaining, based on the detection period whole body box, a tracking period whole body box corresponding to the upper body tracking box, wherein the tracking period whole body box is used to track the to-be-tracked pedestrian.

2. The method according to claim 1, wherein before the obtaining a detection period whole body box of the to-be-tracked pedestrian based on the upper body detection box, the method further comprises:

   obtaining a lower body scanning area based on the upper body detection box; and
   if a lower body detection box is obtained by performing lower body detection in the lower body scanning area, obtaining the detection period whole body box based on the upper body detection box and the lower body detection box.

3. The method according to claim 2, wherein the upper body detection box is $\mathrm{RECT}_u^d = [L_u^d, T_u^d, R_u^d, B_u^d]$, wherein $L_u^d$ is an upper-left horizontal coordinate of the upper body detection box, $T_u^d$ is an upper-left vertical coordinate of the upper body detection box, $R_u^d$ is a lower-right horizontal coordinate of the upper body detection box, and $B_u^d$ is a lower-right vertical coordinate of the upper body detection box; and

   the obtaining a lower body scanning area based on the upper body detection box comprises:

   determining a first parameter, wherein the first parameter is

$$B_f^{estimate} = B_u^d - \left(B_u^d - T_u^d\right) * \left(1 - \frac{1}{Ratio_{default}}\right),$$ wherein $Ratio_{default}$ is a preset ratio;

determining a second parameter, wherein the second parameter is $W_u^d = R_u^d - L_u^d$;

determining a third parameter, wherein the third parameter is $H_f^{estimate}$ =the first parameter $B_f^{estimate} - T_u^d$; and

determining the lower body scanning area based on the first parameter, the second parameter, and the third parameter.

4. The method according to claim 3, wherein the obtaining a lower body scanning area based on the upper body detection box comprises:

determining the lower body scanning area based on the first parameter, the second parameter, and the third parameter, wherein the lower body scanning area is ScanArea = [L^E,T^E,R^E,B^E], L^E is an upper-left horizontal coordinate of the lower body scanning area, T^E is an upper-left vertical coordinate of the lower body scanning area, R^E is a lower-right horizontal coordinate of the lower body scanning area, and B^E is a lower-right vertical coordinate of the lower body scanning area, wherein

$$L^s = \max\left\{1, \; L_u^d - W_u^d/paral1\right\}, \quad T^s = \max\left\{1, \; T_u^d + H_f^{estimate}/paral2\right\},$$

$$R^s = \min\left\{imgW - 1, \; R_u^d + W_u^d/paral2\right\},$$

and

$$B^s = \min\left\{imgH - 1, \; B_f^{estimate} + H_f^{estimate}W_u^d/paral3\right\};$$

and

paral1, paral2, and paral3 are preset values, imgW is a width of any image frame of the to-be-tracked video within the detection period, and imgH is a height of any image frame of the to-be-tracked video within the detection period.

5. The method according to any one of claims 2 to 4, wherein the lower body detection box is $RECT_l^d = [L_l^d, T_l^d, R_l^d, B_l^d]$, wherein $L_l^d$ is an upper-left horizontal coordinate of the lower body detection box, $T_l^d$ is an upper-left vertical coordinate of the lower body detection box, $R_l^d$ is a lower-right horizontal coordinate of the lower body detection box, and $B_l^d$ is a lower-right vertical coordinate of the lower body detection box; and the obtaining the detection period whole body box based on the upper body detection box and the lower body detection box comprises:

determining an upper-left horizontal coordinate of the detection period whole body box, wherein the upper-left horizontal coordinate of the detection period whole body box is $L_f^d = \min(L_u^d, L_l^d)$;

determining that an upper-left vertical coordinate of the detection period whole body box is $T_f^d = T_u^d$;

determining that a lower-right horizontal coordinate of the detection period whole body box is $R_f^d = \max(R_u^d, R_l^d)$;

determining that a lower-right vertical coordinate of the detection period whole body box is $B_f^d = B_l^d$; and

determining that the detection period whole body box is $RECT_f^d = [L_f^d, T_f^d, R_f^d, B_f^d]$.

6. The method according to claim 5, wherein after the determining the detection period whole body box, the method further comprises:

determining that a ratio of a width of the detection period whole body box to a height of the detection period whole body box is $\text{Ratio}_{wh}^{d} = \frac{R_{f}^{d} - L_{f}^{d}}{B_{f}^{d} - T_{f}^{d}}$;

determining that a ratio of a height of the upper body detection box to the height of the detection period whole body box is $\text{Ratio}_{hh}^{d} = \frac{B_{u}^{d} - T_{u}^{d}}{B_{f}^{d} - T_{f}^{d}}$; and

determining the tracking period whole body box based on $\text{Ratio}_{wh}^{d}$ and $\text{Ratio}_{hh}^{d}$.

7. The method according to claim 3 or 4, wherein after the obtaining a lower body scanning area based on the upper body detection box, the method further comprises:

if the lower body detection box is not obtained by performing lower body detection in the lower body scanning area, determining an upper-left horizontal coordinate of the detection period whole body box, wherein the upper-left horizontal coordinate of the detection period whole body box is $L_{f}^{d} = L_{u}^{d}$;

determining that an upper-left vertical coordinate of the detection period whole body box is $T_{f}^{d} = T_{u}^{d}$;

determining that a lower-right horizontal coordinate of the detection period whole body box is $R_{f}^{d} = R_{u}^{d}$;

determining that a lower-right vertical coordinate of the detection period whole body box is $B_{f}^{d} = \left( R_{u}^{d} - L_{u}^{d} \right) * \text{Ratio}_{default} + T_{u}^{d}$; and

determining that the detection period whole body box is $\text{RECT}_{f}^{d} = [L_{f}^{d}, T_{f}^{d}, R_{f}^{d}, B_{f}^{d}]$.

8. The method according to claim 7, wherein after the obtaining a lower body scanning area based on the upper body detection box, the method further comprises:

obtaining a preset ratio $\text{Ratio}_{wh}^{d}$ of a width of the detection period whole body box to a height of the detection period whole body box; and
after the determining the detection period whole body box, the method further comprises:

determining that a ratio of a height of the upper body detection box to the height of the detection period whole body box is $\text{Ratio}_{hh}^{d} = \frac{B_{u}^{d} - T_{u}^{d}}{B_{f}^{d} - T_{f}^{d}}$ and

determining the tracking period whole body box based on $\text{Ratio}_{wh}^{d}$ and $\text{Ratio}_{hh}^{d}$.

9. The method according to claim 6 or 8, wherein the upper body tracking box is $\text{RECT}_{u}^{t} = [L_{u}^{t}, T_{u}^{t}, R_{u}^{t}, B_{u}^{t}]$, wherein $L_{u}^{t}$ is an upper-left horizontal coordinate of the upper body tracking box, $T_{u}^{t}$ is an upper-left vertical coordinate of the upper body tracking box, $R_{u}^{t}$ is a lower-right horizontal coordinate of the upper body tracking box, and $B_{u}^{t}$ is a lower-right vertical coordinate of the upper body tracking box; and

the determining the tracking period whole body box based on $\text{Ratio}_{wh}^{d}$ and $\text{Ratio}_{hh}^{d}$ comprises:

determining an upper-left horizontal coordinate of the tracking period whole body box, wherein if $L_{f}^{d} = L_{u}^{d}$, the upper-left horizontal coordinate of the tracking period whole body box is $L_{f}^{t} = L_{u}^{t}$;

determining that an upper-left vertical coordinate of the tracking period whole body box is $T_{f}^{t} = T_{u}^{t}$;

determining that a lower-right horizontal coordinate of the tracking period whole body box is $R_f^t = L_f^t + W_f^t$;

determining that a lower-right vertical coordinate of the tracking period whole body box is $B_f^t = \frac{B_u^t - T_u^t}{Ratio_{hh}^d} + T_f^t$,

wherein $W_f^t = (B_f^t - T_f^t) * Ratio_{wh}^d$; and

determining that the tracking period whole body box is $RECT_f^t = [L_f^t, T_f^t, R_f^t, B_f^t]$.

10. The method according to any one of claims 1 to 9, wherein the obtaining, within the tracking period, an upper body tracking box of the to-be-tracked pedestrian appearing in the to-be-tracked video comprises:

scattering a plurality of particles by using the upper body detection box as a center, wherein a ratio of a width to a height of any one of the plurality of particles is the same as a ratio of a width of the upper body detection box to the height of the upper body detection box; and
determining the upper body tracking box, wherein the upper body tracking box is a particle most similar to the upper body detection box among the plurality of particles.

11. The method according to claim 9, wherein the obtaining, based on the detection period whole body box, a tracking period whole body box corresponding to the upper body tracking box comprises:

determining the upper-left horizontal coordinate of the tracking period whole body box, wherein if $L_f^d = L_I^d$,

the upper-left horizontal coordinate of the tracking period whole body box is $L_f^t = R_f^t - W_f^t$;

determining that the upper-left vertical coordinate of the tracking period whole body box is $T_f^t = T_u^t$;

determining that the lower-right horizontal coordinate of the tracking period whole body box is $R_f^t = R_u^t$;

determining that the lower-right vertical coordinate of the tracking period whole body box is

$B_f^t = \frac{B_u^t - T_u^t}{Ratio_{hh}^d} + T_f^t$, wherein $W_f^t = (B_f^t - T_f^t) * Ratio_{wh}^d$; and

determining that the tracking period whole body box is $RECT_f^t = [L_f^t, T_f^t, R_f^t, B_f^t]$.

12. The method according to any one of claims 1 to 11, wherein the method further comprises:

obtaining a target image frame sequence of the to-be-tracked video, wherein the target image frame sequence comprises one or more consecutive image frames, and the target image frame sequence is before the detection period;
obtaining a background area of the to-be-tracked video based on the target image frame sequence;
obtaining a foreground area of any image frame of the to-be-tracked video by subtracting the background area from the image frame of the to-be-tracked video within the detection period; and
obtaining the to-be-tracked pedestrian by detecting the foreground area of the image frame of the to-be-tracked video.

13. The method according to claim 12, wherein the obtaining an upper body detection box of a to-be-tracked pedestrian appearing in the to-be-tracked video comprises:

determining a target image frame, wherein the target image frame is an image frame in which the to-be-tracked pedestrian appears; and
obtaining the upper body detection box in a foreground area of the target image frame.

14. An electronic device, comprising:

a first determining unit, configured to determine a detection period and a tracking period of a to-be-tracked video;
a first obtaining unit, configured to obtain, within the detection period, an upper body detection box of a to-be-tracked pedestrian appearing in the to-be-tracked video;

a second obtaining unit, configured to obtain a detection period whole body box of the to-be-tracked pedestrian based on the upper body detection box;

a third obtaining unit, configured to obtain, within the tracking period, an upper body tracking box of the to-be-tracked pedestrian appearing in the to-be-tracked video; and

a fourth obtaining unit, configured to obtain, based on the detection period whole body box, a tracking period whole body box corresponding to the upper body tracking box, wherein the tracking period whole body box is used to track the to-be-tracked pedestrian.

15. The electronic device according to claim 14, wherein the second obtaining unit is specifically configured to: obtain a lower body scanning area based on the upper body detection box; and if a lower body detection box is obtained by performing lower body detection in the lower body scanning area, obtain the detection period whole body box based on the upper body detection box and the lower body detection box.

16. The electronic device according to claim 15, wherein the upper body detection box is $\mathrm{RECT}_u^d = \left[L_u^d, T_u^d, R_u^d, B_u^d\right]$,

wherein $L_u^d$ is an upper-left horizontal coordinate of the upper body detection box, $T_u^d$ is an upper-left vertical coordinate of the upper body detection box, $R_u^d$ is a lower-right horizontal coordinate of the upper body detection box, and $B_u^d$ is a lower-right vertical coordinate of the upper body detection box; and when obtaining the lower body scanning area based on the upper body detection box, the second obtaining unit is specifically configured to: determine a first parameter, wherein the first parameter is

$$B_f^{estimate} = B_u^d - \left(B_u^d - T_u^d\right) * \left(1 - \frac{1}{\mathrm{Ratio}_{default}}\right),$$ wherein Ratio$_{default}$ is a preset ratio; determine a second parameter, wherein the second parameter is $W_u^d = R_u^d - L_u^d$; determine a third parameter, wherein the third parameter is $H_f^{estimate} = $ the first parameter $B_f^{estimate} - T_u^d$; and determine the lower body scanning area based on the first parameter, the second parameter, and the third parameter.

17. The electronic device according to claim 16, wherein when obtaining the lower body scanning area based on the upper body detection box, the second obtaining unit is specifically configured to determine the lower body scanning area based on the first parameter, the second parameter, and the third parameter, wherein the lower body scanning area is ScanArea = [L$^E$,T$^E$,R$^E$,B$^E$], L$^E$ is an upper-left horizontal coordinate of the lower body scanning area, T$^E$ is an upper-left vertical coordinate of the lower body scanning area, R$^E$ is a lower-right horizontal coordinate of the lower body scanning area, and B$^E$ is a lower-right vertical coordinate of the lower body scanning area, wherein

$$L^s = \max\left\{1, \ L_u^d - W_u^d/paral1\right\}, \quad T^s = \max\left\{1, \ T_u^d + H_f^{estimate}/paral2\right\},$$

$$R^s = \min\left\{imgW - 1, \ R_u^d + W_u^d/paral2\right\},$$

and

$$B^s = \min\left\{imgH - 1, \ B_f^{estimate} + H_f^{estimate} W_u^d/paral3\right\};$$

and

paral1, paral2, and paral3 are preset values, imgW is a width of any image frame of the to-be-tracked video within the detection period, and imgH is a height of any image frame of the to-be-tracked video within the detection period.

18. The electronic device according to any one of claims 15 to 17, wherein the lower body detection box is $\mathrm{RECT}_l^d = \left[L_l^d, T_l^d, R_l^d, B_l^d\right]$, wherein $L_l^d$ is an upper-left horizontal coordinate of the lower body detection box,

$T_l^d$ is an upper-left vertical coordinate of the lower body detection box, $R_l^d$ is a lower-right horizontal coordinate of the lower body detection box, and $B_l^d$ is a lower-right vertical coordinate of the lower body detection box; and when obtaining the detection period whole body box of the to-be-tracked pedestrian based on the upper body detection box, the second obtaining unit is specifically configured to: determine an upper-left horizontal coordinate of the detection period whole body box, wherein the upper-left horizontal coordinate of the detection period whole body box is $L_f^d = \min(L_u^d, L_l^d)$, determine that an upper-left vertical coordinate of the detection period whole body box is $T_f^d = T_u^d$; determine that a lower-right horizontal coordinate of the detection period whole body box is $R_f^d = \max(R_u^d, R_l^d)$; determine that a lower-right vertical coordinate of the detection period whole body box is $B_f^d = B_l^d$; and determine that the detection period whole body box is $RECT_f^d = [L_f^d, T_f^d, R_f^d, B_f^d]$.

19. The electronic device according to claim 18, wherein the fourth obtaining unit is specifically configured to: determine that a ratio of a width of the detection period whole body box to a height of the detection period whole body box is $Ratio_{wh}^d = \frac{R_f^d - L_f^d}{B_f^d - T_f^d}$; determine that a ratio of a height of the upper body detection box to the height of the detection period whole body box is $Ratio_{hh}^d = \frac{B_u^d - T_u^d}{B_f^d - T_f^d}$; and determine the tracking period whole body box based on $Ratio_{wh}^d$ and $Ratio_{hh}^d$.

20. The electronic device according to claim 16 or 17, wherein when obtaining the detection period whole body box of the to-be-tracked pedestrian based on the upper body detection box, the second obtaining unit is specifically configured to: if the lower body detection box is not obtained by performing lower body detection in the lower body scanning area, determine an upper-left horizontal coordinate of the detection period whole body box, wherein the upper-left horizontal coordinate of the detection period whole body box is $L_f^d = L_u^d$; determine that an upper-left vertical coordinate of the detection period whole body box is $T_f^d = T_u^d$; determine that a lower-right horizontal coordinate of the detection period whole body box is $R_f^d = R_u^d$; determine that a lower-right vertical coordinate of the detection period whole body box is $B_f^d = (R_u^d - L_u^d) * Ratio_{default} + T_u^d$; and determine that the detection period whole body box is $RECT_f^d = [L_f^d, T_f^d, R_f^d, B_f^d]$.

21. The electronic device according to claim 20, wherein the fourth obtaining unit is specifically configured to: obtain a preset ratio $Ratio_{wh}^d$ of a width of the detection period whole body box to a height of the detection period whole body box; determine that a ratio of a height of the upper body detection box to the height of the detection period whole body box is $Ratio_{hh}^d = \frac{B_u^d - T_u^d}{B_f^d - T_f^d}$; and determine the tracking period whole body box based on $Ratio_{wh}^d$ and $Ratio_{hh}^d$.

22. The electronic device according to claim 19 or 21, wherein the upper body tracking box is $RECT_u^t = [L_u^t, T_u^t, R_u^t, B_u^t]$, wherein $L_u^t$ is an upper-left horizontal coordinate of the upper body tracking box, $T_u^t$ is an upper-left vertical coordinate of the upper body tracking box, $R_u^t$ is a lower-right horizontal coordinate of the upper body tracking box, and $B_u^t$ is a lower-right vertical coordinate of the upper body tracking box; and when determining the tracking period whole body box based on $Ratio_{wh}^d$ and $Ratio_{hh}^d$, the fourth obtaining unit is specifically configured to: determine an upper-left horizontal coordinate of the tracking period whole body box, wherein if $L_f^d = L_u^d$, the upper-left horizontal coordinate of the tracking period whole body box is $;L_f^t = L_u^t;$ determine that an upper-left vertical coordinate of the tracking period whole body box is $T_f^t = T_u^t;$ determine that a lower-right horizontal coordinate of the tracking period whole body box is $R_f^t = L_f^t + W_f^t;$ determine that a lower-right vertical coordinate of the tracking period whole body box is $B_f^t = \frac{B_u^t - T_u^t}{Ratio_{hh}^d} + T_f^t$, wherein $W_f^t = (B_f^t - T_f^t) * Ratio_{wh}^d;$ and determine that the tracking period whole body box is $RECT_f^t = [L_f^t, T_f^t, R_f^t, B_f^t].$

23. The electronic device according to any one of claims 14 to 22, wherein the third obtaining unit is specifically configured to: scatter a plurality of particles by using the upper body detection box as a center, wherein a ratio of a width to a height of any one of the plurality of particles is the same as a ratio of a width of the upper body detection box to the height of the upper body detection box; and determine the upper body tracking box, wherein the upper body tracking box is a particle most similar to the upper body detection box among the plurality of particles.

24. The electronic device according to claim 22, wherein the fourth obtaining unit is specifically configured to: determine the upper-left horizontal coordinate of the tracking period whole body box, wherein if $L_f^d = L_i^d$, the upper-left horizontal coordinate of the tracking period whole body box is $L_f^t = R_f^t - W_f^t;$ determine that the upper-left vertical coordinate of the tracking period whole body box is $T_f^t = T_u^t;$ determine that the lower-right horizontal coordinate of the tracking period whole body box is $R_f^t = R_u^t;$ determine that the lower-right vertical coordinate of the tracking period whole body box is $B_f^t = \frac{B_u^t - T_u^t}{Ratio_{hh}^d} + T_f^t$, wherein $W_f^t = (B_f^t - T_f^t) * Ratio_{wh}^d;$ and determine that the tracking period whole body box is $RECT_f^t = [L_f^t, \quad T_f^t, R_f^t, B_f^t].$

25. The electronic device according to any one of claims 14 to 24, wherein the electronic device further comprises:

    a fifth obtaining unit, configured to obtain a target image frame sequence of the to-be-tracked video, wherein the target image frame sequence comprises one or more consecutive image frames, and the target image frame sequence is before the detection period;
    a sixth obtaining unit, configured to obtain a background area of the to-be-tracked video based on the target image frame sequence;
    a seventh obtaining unit, configured to obtain a foreground area of any image frame of the to-be-tracked video by subtracting the background area from the image frame of the to-be-tracked video within the detection period; and
    an eighth obtaining unit, configured to obtain the to-be-tracked pedestrian by detecting the foreground area of the image frame of the to-be-tracked video.

26. The electronic device according to claim 25, wherein the first obtaining unit is specifically configured to: determine a target image frame, wherein the target image frame is an image frame in which the to-be-tracked pedestrian appears; and obtain the upper body detection box in a foreground area of the target image frame.

100

Electronic device

122 — Processor

Power supply — 126

Operating system — 141

Data — 144

Application program — 142

Storage medium — 130

Input/Output interface — 158

FIG. 1

Processor 122

Metadata extraction
unit 21

Object extraction
module 211

Feature extraction
module 212

Index construction
module 213

Query unit 22

Feature extraction
module 221

Feature fusion
module 222

Indexing and query
module 223

FIG. 2

| Obtain a to-be-tracked video | 301 |

| Obtain a target image frame sequence | 302 |

| Obtain a background area of the to-be-tracked video | 303 |

| Determine a detection period and a tracking period of the to-be-tracked video | 304 |

| Obtain a foreground area of any image frame of the to-be-tracked video | 305 |

| Obtain a to-be-tracked pedestrian | 306 |

| Obtain an upper body detection box of the to-be-tracked pedestrian | 307 |

| Obtain a lower body scanning area based on the upper body detection box | 308 |

TO
FIG. 3B

FIG. 3A

CONT.
FROM
FIG. 3A

Determine
whether a lower
body detection box of the
to-be-tracked pedestrian is detected
in the lower body
scanning
area — 309

No                                                                Yes

Obtain a third ratio                    Obtain the lower body — 310
                                        detection box

313

Obtain the detection              Obtain a detection — 311
period whole body box             period whole body box

314

Determine a fourth ratio          Obtain a first ratio and a — 312
of the detection period           second ratio
whole body box

315

Determine an upper body — 316
tracking box

Obtain a tracking period — 317
whole body box of the to-
be-tracked pedestrian

FIG. 3B

2015-07-13 18:30:53

Hefei City
Baohe District
Bao Gong Temple

Opposite to the south of Jiuqu
Bridge, Baohe Park Road

FIG. 4

FIG. 5

Frame: 30040    2:0    2015-07-13 18:30:27

Hefei City
Baohe District
Bao Gong Temple

Opposite to the south of Jiuqu
Bridge, Baohe Park Road

FIG. 6

(a)    (b)

FIG. 7

Detection period T1

Tracking period T2

FIG. 8

| Object extraction module 211 | Feature extraction module 212 | Index construction module 213 | Storage medium 130 | Feature extraction module 221 | Indexing and query module 223 |

Step 901: Obtain a to-be-tracked video

Step 902: Detect and track a to-be-tracked pedestrian in the to-be-tracked video, to obtain a pedestrian sequence

Step 903: Send the pedestrian sequence to a feature extraction module

Step 904: Obtain a feature of the pedestrian sequence

Step 908: Receive a tracking target

TO FIG. 9B  TO FIG. 9B  TO FIG. 9B  TO FIG. 9B  TO FIG. 9B  TO FIG. 9B

FIG. 9A

CONT.
FROM
FIG. 9A

CONT.
FROM
FIG. 9A

CONT.
FROM
FIG. 9A

CONT.
FROM
FIG. 9A

CONT.
FROM
FIG. 9A

CONT.
FROM
FIG. 9A

Step 905: Send the feature of the pedestrian sequence to an index construction module

Step 906: Establish an index list

Step 909: Perform feature extraction on the tracking target

Step 910: Fuse different features of the tracking target

Step 907: Store the index list in a storage medium

Step 911: Send a fused feature to an indexing and query module

Step 912: Query the tracking target

FIG. 9B

EP 3 573 022 A1

Camera cluster 105

Object extraction module 211

1001

TO FIG. 10B

TO FIG. 10B

**Video Capture**
√ coding\decoding
√ transmission
√ storage

**Metadata Generation**
√ object detection
√ tracking
√ background modeling

TO FIG. 10B

Query

General feature extraction

Special feature extraction

TO FIG. 10B

TO FIG. 10B

TO FIG. 10B

1003

Feature extraction module 221

FIG. 10A

Feature extraction
module 212

Index construction
module 213

1002

CONT.
FROM
FIG. 10A

Feature-1
ID  Feature-1
ID  Feature-1
ID+  Feature-2
...

CONT.
FROM
FIG. 10A

Feature-1
ID  Feature-1
ID  Feature-1
ID+  Feature-2
...

Feature Extraction
√ part detection
√ general feature
√ special feature
√ feature fusing

Feature-1
Feature-1
ID  Feature-1
ID+  Feature-2
...

Index
Construction
√ method chosen
√ increment

Dataset

Storage
medium
130

CONT.
FROM
FIG. 10A

CONT.
FROM
FIG. 10A

Query

CONT.
FROM
FIG. 10A

Feature fusion

Indexing

CONT.
FROM
FIG. 10A

Feature fusion
module 222

Indexing and
query module 223

FIG. 10B

First determining unit 1101

Fifth obtaining unit 1102

Sixth obtaining unit 1103

Seventh obtaining unit 1104

Eighth obtaining unit 1105

First obtaining unit 1106

Second obtaining unit 1107

Third obtaining unit 1108

Fourth obtaining unit 1109

FIG. 11

## INTERNATIONAL SEARCH REPORT

International application No.

PCT/CN2018/079514

### A. CLASSIFICATION OF SUBJECT MATTER

G06T 7/20 (2017.01) i

According to International Patent Classification (IPC) or to both national classification and IPC

### B. FIELDS SEARCHED

Minimum documentation searched (classification system followed by classification symbols)

G06T; H04N

Documentation searched other than minimum documentation to the extent that such documents are included in the fields searched

Electronic data base consulted during the international search (name of data base and, where practicable, search terms used)

CNPAT, CNKI, WPI, EPODOC: 视频, 行人, 对象, 跟踪, 人, 上半身, 下半身, 全身, 框, 检测, 识别, 坐标, 比例, 周期, 帧,

video, frame?, person?, object?, track+, upper, part, body, lower, half, recogniz+, detect+, coordinate, period

### C. DOCUMENTS CONSIDERED TO BE RELEVANT

| Category* | Citation of document, with indication, where appropriate, of the relevant passages | Relevant to claim No. |
|---|---|---|
| A | CN 104063681 A (LENOVO (BEIJING) CO., LTD.), 24 September 2014 (24.09.2014), description, paragraphs 0073-0080 | 1-26 |
| A | CN 105574515 A (NANJING UNIVERSITY OF POSTS AND TELECOMMUNICATIONS), 11 May 2016 (11.05.2016), entire document | 1-26 |
| A | CN 102592288 A (XI'AN UNIVERSITY OF TECHNOLOGY), 18 July 2012 (18.07.2012), entire document | 1-26 |
| A | CN 101232571 A (BEIJING VIMICRO CORP.), 30 July 2008 (30.07.2008), entire document | 1-26 |
| A | US 2014348382 A1 (HITACHI, LTD.), 27 November 2014 (27.11.2014), entire document | 1-26 |

☐ Further documents are listed in the continuation of Box C.     ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 May 2018 | 08 June 2018 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer  LI, Ping  Telephone No. 86-(10)-53961700 |
|---|---|

Form PCT/ISA/210 (second sheet) (January 2015)

## INTERNATIONAL SEARCH REPORT
### Information on patent family members

| International application No. |
| --- |
| PCT/CN2018/079514 |

| Patent Documents referred in the Report | Publication Date | Patent Family | Publication Date |
| --- | --- | --- | --- |
| CN 104063681 A | 24 September 2014 | CN 104063681 B | 27 February 2018 |
| CN 105574515 A | 11 May 2016 | None | |
| CN 102592288 A | 18 July 2012 | CN 102592288 B | 02 July 2014 |
| CN 101232571 A | 30 July 2008 | CN 101232571 B | 09 June 2010 |
| US 2014348382 A1 | 27 November 2014 | JP 6276519 B2 | 07 February 2018 |
| | | US 9183432 B2 | 10 November 2015 |
| | | JP 2014229068 A | 08 December 2014 |
| | | CN 104182987 A | 03 December 2014 |

Form PCT/ISA/210 (patent family annex) (January 2015)

**EP 3 573 022 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710208767